(19) Europäisches Patentamt / European Patent Office / Office européen des brevets

(11) **EP 4 324 145 B1**

(12) **EUROPEAN PATENT SPECIFICATION**

(45) Date of publication and mention
of the grant of the patent:
**22.10.2025 Bulletin 2025/43**

(21) Application number: **22717959.5**

(22) Date of filing: **15.03.2022**

(51) International Patent Classification (IPC):
**H04L 5/00** *(2006.01)*    **H04W 24/10** *(2009.01)*
**H04W 72/04** *(2023.01)*

(52) Cooperative Patent Classification (CPC):
**H04L 5/0023; H04B 7/0617; H04L 5/0048;**
**H04L 5/0051;** H04W 24/08

(86) International application number:
**PCT/US2022/020451**

(87) International publication number:
**WO 2022/220978 (20.10.2022 Gazette 2022/42)**

(54) **DEFINING PRS & SRS ASSOCIATION TO IMPROVE MULTI-RTT POSITIONING IN PROCESSING CAPABILITY CONSTRAINED SCENARIOS**

DEFINITION EINER PRS- UND SRS-ASSOZIATION ZUR VERBESSERUNG DER MULTI-RTT-POSITIONIERUNG IN SZENARIEN MIT EINGESCHRÄNKTER VERARBEITUNGSKAPAZITÄT

DÉFINITION D'UNE ASSOCIATION DE PRS ET DE SRS VISANT À AMÉLIORER UN POSITIONNEMENT MULTI-RTT DANS DES SCÉNARIOS À CONTRAINTE DE CAPACITÉ DE TRAITEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2021   GR 20210100258**

(43) Date of publication of application:
**21.02.2024 Bulletin 2024/08**

(60) Divisional application:
**25176465.0 / 4 580 283**

(73) Proprietor: **QUALCOMM INCORPORATED**
**San Diego, California 92121-1714 (US)**

(72) Inventors:
• **YERRAMALLI, Srinivas**
**San Diego, California 92121 (US)**
• **KUMAR, Mukesh**
**San Diego, California 92121 (US)**
• **MANOLAKOS, Alexandros**
**San Diego, California 92121 (US)**

(74) Representative: **Reddie & Grose LLP**
**The White Chapel Building**
**10 Whitechapel High Street**
**London E1 8QS (GB)**

(56) References cited:
**WO-A1-2020/101266     US-A1- 2020 022 167**

**Description**

**CROSS-REFERENCE TO RELATED APPLICATION**

This application claims the benefit of Greek Patent Application No. 20210100258, entitled "DEFINING PRS & SRS ASSOCIATION TO IMPROVE MULTI-RTT POSITIONING IN PROCESSING CAPABILITY CONSTRAINED SCENARIOS" and filed on April 14, 2021.

**Technical Field**

The present disclosure relates generally to communication systems, and more particularly, to wireless communication involving positioning.

**Introduction**

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra-reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

PCT application with publication number WO2020/101266 discloses a method by which a terminal transmits, in a wireless communication system, a reference signal for positioning is disclosed. Particularly, the disclosure can comprise: receiving information related to a cell list including at least one cell; receiving one or more downlink signals from the at least one cell; determining the transmission power of the reference signal on the basis of the reception power of a specific downlink signal from among the one or more downlink signals; and transmitting the reference signal on the basis of the transmission power.

US patent application with publication number US2020/022167 discloses a network entity scheduling, as part of a positioning procedure for a UE, a first set of resources for transmission of DL RS(s) by at least one BS to the UE. The network entity associates the DL RS(s) with UL RS(s) for transmission by the UE on a second set of resources to one or more BSs as part of the positioning procedure for the UE. The network entity transmits, to the UE, an indication of the association between the DL RS(s) and the UL RS(s). The UE receives the indication along with the DL RS(s) from the at least one BS. The UE transmits the UL RS(s) to the one or more BSs on the second set of resources in response to the received indication.

**SUMMARY**

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

The invention is defined by the independent claims to which reference should now be made. Optional features are set forth in the dependent claims.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed.

**BRIEF DESCRIPTION OF THE DRAWINGS**

FIG. 1 is a diagram illustrating an example of a wireless communications system and an access network in accordance with aspects presented herein.

FIG. 2A is a diagram illustrating an example of a first frame, in accordance with various aspects of the present disclosure.

FIG. 2B is a diagram illustrating an example of downlink (DL) channels within a subframe, in accordance with various aspects of the present disclosure.

FIG. 2C is a diagram illustrating an example of a second frame, in accordance with various aspects of the present disclosure.

FIG. 2D is a diagram illustrating an example of uplink (UL) channels within a subframe, in accordance with various aspects of the present disclosure.

FIG. 3 is a diagram illustrating an example of a base station and UE in an access network.

FIG. 4 is a diagram illustrating an example of a UE positioning based on reference signal measurements.

FIGs. 5A and 5B are diagrams illustrating an example of DL-PRS transmitted from multiple TRPs and UL-SRS transmitted from a UE.

FIG. 6 is a diagram illustrating an example of estimating a UE's position based on multi-RTT measurements from multiple TRPs or base stations.

FIG. 7 is a communication flow illustrating an example of a UE communicating with a base station regarding DL-PRS resources to be measured according to aspects of the present disclosure.

FIG. 8 is a communication flow illustrating an example of a UE communicating with multiple base stations regarding DL-PRS resources to be measured according to aspects of the present disclosure.

FIG. 9 is a communication flow illustrating an example of a base station indicating a list of UL-SRS to a UE for the UE to prioritize corresponding DL-PRS measurements according to aspects of the present disclosure.

FIG. 10 is a diagram illustrating an example of a base station determining a list of UL-SRS resources in which a UE may prioritize its DL-PRS measurements based on a prior measuring instance.

FIG. 11 is a flowchart of a method of wireless communication in accordance with aspects presented herein.

FIG. 12 is a diagram illustrating an example of a hardware implementation for an example apparatus in accordance with aspects presented herein.

FIG. 13 is a flowchart of a method of wireless communication in accordance with aspects presented herein.

FIG. 14 is a diagram illustrating an example of a hardware implementation for an example apparatus in accordance with aspects presented herein.

FIG. 15 is a flowchart of a method of wireless communication in accordance with aspects presented herein.

FIG. 16 is a diagram illustrating an example of a hardware implementation for an example apparatus in accordance with aspects presented herein.

FIG. 17 is a flowchart of a method of wireless communication in accordance with aspects presented herein.

FIG. 18 is a diagram illustrating an example of a hardware implementation for an example apparatus in accordance with aspects presented herein.

**DETAILED DESCRIPTION**

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

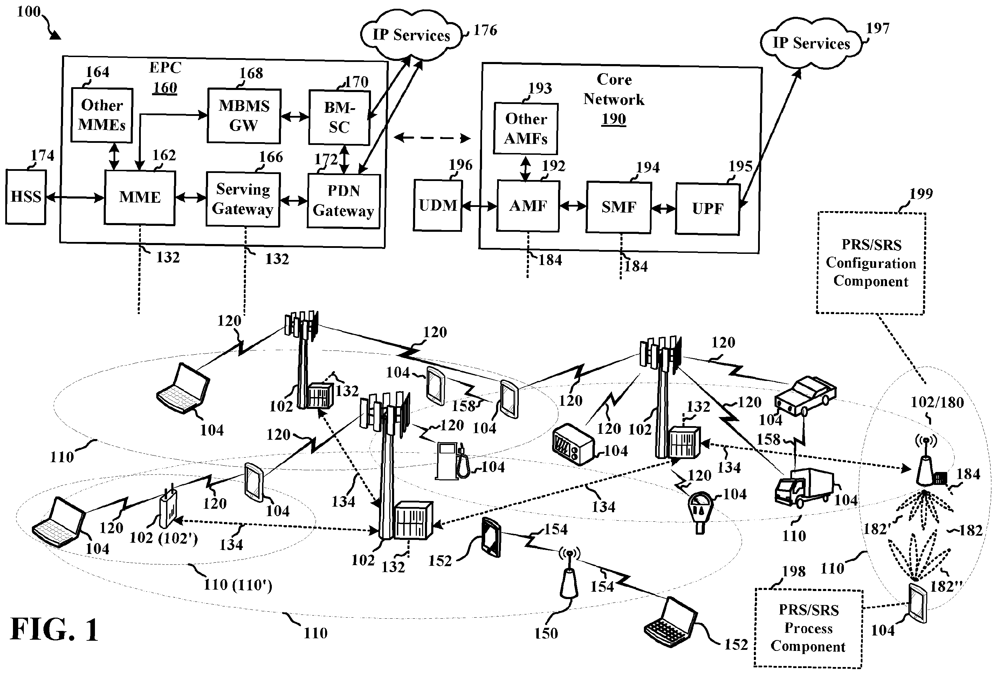

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

Aspects presented herein may improve positioning based on multi-RTT measurements for a UE and a base station. Aspects presented herein may enable a base station/LMF and a UE to communicate with each other to prioritize measurements for DL-PRS and/or UL-SRS resources, such that correct pairs of DL-PRS/UL-SRS resources may be measured by the UE and the base station to improve the performance and accuracy of the positioning based on the multi-RTT measurements.

In certain aspects, the UE 104 may include a PRS/SRS process component 198 configured to indicate a list of PRS resources in which the UE plans to measure in a given occasion to a base station and/or to receive a list of SRS resources from a base station in which the UE may prioritize its PRS measurements based least in part on the list. In one configuration, the PRS/SRS process component 198 may be configured to determine an association between one or more reception properties of one or more PRS resources and one or more transmission properties of one or more SRS resources. In such configuration, the PRS/SRS process component 198 may transmit, to at least one serving BS, information indicating the one or more PRS resources that the UE is configured to measure in a future measurement occasion. In such configuration, the PRS/SRS process component 198 may measure PRSs received from one or more BSs on the one or more PRS resources based on the one or more reception properties. In such configuration, the PRS/SRS process component 198 may transmit, to the one or more BSs after measuring the PRSs, SRSs on the one or more SRS resources based on the one or more transmission properties. In another configuration, the PRS/SRS process component 198 may be configured to receive, from at least one serving BS, information indicating one or more SRS resources or one or more PRS resources corresponding to the one or more SRS resources, the one or more SRS resources being associated with one or more transmission properties. In such configuration, the PRS/SRS process component 198 may transmit, to one or more BSs, SRSs based on the one or more transmission properties, the SRSs being transmitted on the indicated one or more SRS resources or on the one or more SRS resources corresponding to the indicated one or more PRS resources. In such configuration, the PRS/SRS process component 198 may prioritize measuring, after transmitting the SRSs, PRSs received from the at least one BS on the one or more PRS resources in one measurement occasion, the PRSs being received based on one or more reception properties that are associated with the one or more transmission properties.

In certain aspects, the base station 102/180 may include a PRS/SRS configuration component 199 configured to receive a list of PRS resources from a UE in which the UE plans to measure in a given occasion and/or to indicate a list of SRS resources to a UE in which the UE may prioritize its PRS measurements based least in part on the list. In one configuration, the PRS/SRS configuration component 199 may be configured to receive, from a UE, information indicating one or more PRS resources that the UE is configured to measure or has measured in one measurement occasion. In such configuration, the PRS/SRS configuration component 199 may transmit PRSs on the indicated one or more PRS resources based on one or more transmission properties. In such configuration, the PRS/SRS configuration component 199 may receive, from the UE after transmitting the PRSs, SRSs on one or more SRS resources based on one or more reception properties that are associated with the one or more transmission properties. In such configuration, the PRS/SRS configuration component 199 may measure the received SRSs on the one or more SRS resources corresponding to the indicated one or more PRS resources. In another configuration, the PRS/SRS configuration component 199 may be configured to measure SRSs received from a UE on one or more SRS resources in a measurement occasion. In such configuration, the PRS/SRS configuration component 199 may determine a subset of SRS resources of the one or more SRS resources, the subset of SRS resources corresponding to one or more reception properties at the BS. In such configuration, the PRS/SRS configuration component 199 may transmit, to the UE, PRSs on one or more PRS resources based on one or more transmission properties at the BS, the one or more PRS resources corresponding to the determined subset of SRS resources, the one or more transmission properties being associated with the one or more reception properties.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over third backhaul links 134 (e.g., X2 interface). The first backhaul links 132, the second backhaul links 184, and the third backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to $Y$ MHz (e.g., 5, 10, 15, 20, 100, 400, etc. MHz) bandwidth per carrier allocated in a carrier aggregation of up to a total of $Yx$ MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, WiMedia, Bluetooth, ZigBee, Wi-Fi based on the Institute of Electrical and Electronics Engineers (IEEE) 802.11 standard, LTE, or NR.

The wireless communications system may further include a Wi-Fi access point (AP) 150 in communication with Wi-Fi stations (STAs) 152 via communication links 154, e.g., in a 5 GHz unlicensed frequency spectrum or the like. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same unlicensed frequency spectrum (e.g., 5 GHz, or the like) as used by the Wi-Fi AP 150. The small cell 102', employing NR in an unlicensed frequency spectrum, may boost coverage to and/or increase capacity of the access network.

The electromagnetic spectrum is often subdivided, based on frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band.

A base station 102, whether a small cell 102' or a large cell (e.g., macro base station), may include and/or be referred to as an eNB, gNodeB (gNB), or another type of base station. Some base stations, such as gNB 180 may operate in a traditional sub 6 GHz spectrum, in millimeter wave frequencies, and/or near millimeter wave frequencies in communication with the UE 104. When the gNB 180 operates in millimeter wave or near millimeter wave frequencies, the gNB 180 may be referred to as a millimeter wave base station. The millimeter wave base station 180 may utilize beamforming 182 with the UE 104 to compensate for the path loss and short range. The base station 180 and the UE 104 may each include a plurality of antennas, such as antenna elements, antenna panels, and/or antenna arrays to facilitate the beamforming.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a Packet Switch (PS) Streaming (PSS) Service, and/or other IP services.

The base station may include and/or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

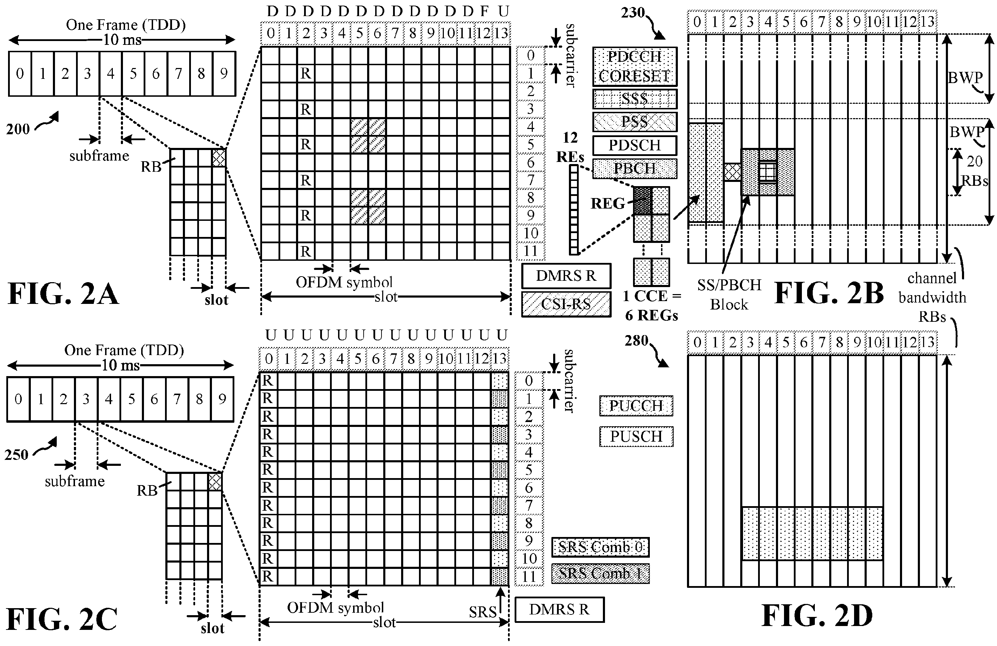

FIG. 2A is a diagram 200 illustrating an example of a first subframe within a 5G NR frame structure. FIG. 2B is a diagram 230 illustrating an example of DL channels within a 5G NR subframe. FIG. 2C is a diagram 250 illustrating an example of a second subframe within a 5G NR frame structure. FIG. 2D is a diagram 280 illustrating an example of UL channels within a 5G NR subframe. The 5G NR frame structure may be frequency division duplexed (FDD) in which for a particular set of subcarriers (carrier system bandwidth), subframes within the set of subcarriers are dedicated for either DL or UL, or may be time division duplexed (TDD) in which for a particular set of subcarriers (carrier system bandwidth), subframes within the set of subcarriers are dedicated for both DL and UL. In the examples provided by FIGs. 2A, 2C, the 5G NR frame structure is assumed to be TDD, with subframe 4 being configured with slot format 28 (with mostly DL), where D is DL, U is UL, and F is flexible for use between DL/UL, and subframe 3 being configured with slot format 1 (with all UL). While subframes 3, 4 are shown with slot formats 1, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G NR frame structure that is TDD.

Other wireless communication technologies may have a different frame structure and/or different channels. A frame (10 ms) may be divided into 10 equally sized subframes (1 ms). Each subframe may include one or more time slots. Subframes may also include minislots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) OFDM (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies $\mu$ 0 to 4 allow for 1, 2, 4, 8, and 16 slots, respectively, per subframe. For slot configuration 1, different numerologies 0 to 2 allow for 2, 4, and 8 slots, respectively, per subframe. Accordingly, for slot configuration 0 and numerology $\mu$, there are 14 symbols/slot and $2^\mu$ slots/subframe. The subcarrier spacing and symbol length/duration are a function of the numerology. The subcarrier spacing may be equal to $2^\mu * 15$ kHz, where $\mu$ is the numerology 0 to 4. As such, the numerology $\mu=0$ has a subcarrier spacing of 15 kHz and the numerology $\mu=4$ has a subcarrier spacing of 240 kHz. The symbol length/duration is inversely related to the subcarrier spacing. FIGs. 2A-2D provide an example of slot configuration 0 with 14 symbols per slot and numerology $\mu=2$ with 4 slots per subframe. The slot duration is 0.25 ms, the subcarrier spacing is 60 kHz, and the symbol duration is approximately 16.67 $\mu$s. Within a set of frames, there may be one or more different bandwidth parts (BWPs) (see FIG. 2B) that are frequency division multiplexed. Each BWP may have a particular numerology.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as R for one particular configuration, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs) (e.g., 1, 2, 4, 8, or 16 CCEs), each CCE including six RE groups (REGs), each REG including 12 consecutive REs in an OFDM symbol of an RB. A PDCCH within one BWP may be referred to as a control resource set (CORESET). A UE is configured to monitor PDCCH candidates in a PDCCH search space (e.g., common search space, UE-specific search space) during PDCCH monitoring occasions on the CORESET, where the PDCCH candidates have different DCI formats and different aggregation levels. Additional BWPs may be located at greater and/or lower frequencies across the channel bandwidth. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (also referred to as SS block (SSB)). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and hybrid automatic repeat request (HARQ) ACK/NACK feedback. The PUSCH carries data, and may additionally be used to carry a buffer status report (BSR), a power headroom report (PHR), and/or UCI.

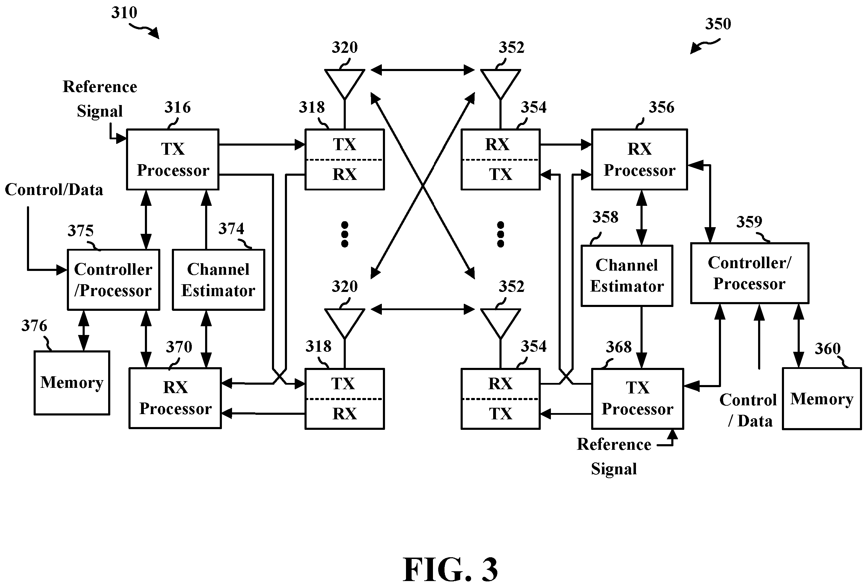

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318 TX. Each transmitter 318 TX may modulate an RF carrier with a respective spatial stream for transmission.

At the UE 350, each receiver 354 RX receives a signal through its respective antenna 352. Each receiver 354 RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with the PRS/SRS process component 198 of FIG. 1.

At least one of the TX processor 316, the RX processor 370, and the controller/processor 375 may be configured to perform aspects in connection with the PRS/SRS configuration component 199 of FIG. 1.

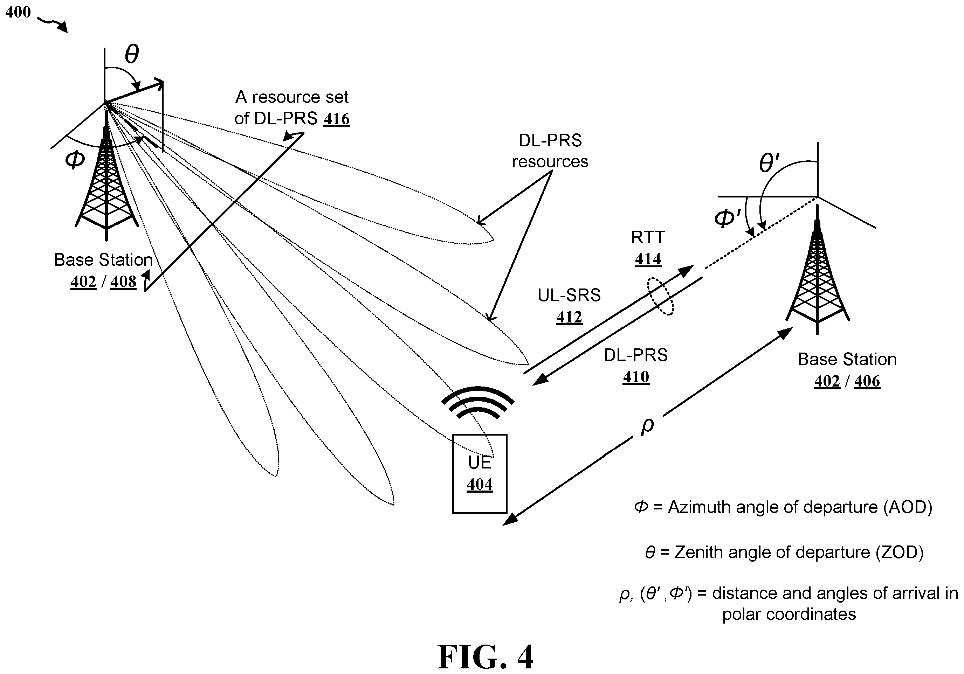

A UE's position may be estimated based on measuring reference signals transmitted between the UE and one or more base stations and/or transmission reception points (TRPs) of the one or more base stations. FIG. 4 is a diagram 400 illustrating an example of a UE positioning based on reference signal measurements. In one example, a UE 404's location may be estimated based on multi-cell round trip time (multi-RTT) measurements, where multiple base stations 402 may perform round trip time (RTT) measurements for signals transmitted to and received from the UE 404 to determine the UE 404's approximate distance with respect to each of the multiple base stations 402. Similarly, the UE 404 may perform RTT measurements for signals transmitted to and received from the base stations 402 to determine each base station's approximate distance with respect to the UE 404. Then, based at least in part on the UE 404's approximate distances with the multiple base stations 402, a location management function (LMF) that is associated with the base stations 402 and/or the UE 404 may estimate the UE 404's position. For example, a base station 406 may transmit at least one downlink positioning reference signal (DL-PRS) 410 to the UE 404, and may receive at least one uplink sounding reference signal (UL-SRS) 412 transmitted from the UE 404. Based at least in part on measuring an RTT 414 between the DL-PRS 410 transmitted and the UL-SRS 412 received, the base station 406 or an LMF associated with the base station 406 may identify the UE 404's position (e.g., distance) with respect to the base station 406. Similarly, the UE 404 may transmit UL-SRS 412 to the base station 406, and may receive DL-PRS 410 transmitted from the base station 406. Based at least in part on measuring the RTT 414 between the UL-SRS 412 transmitted and the DL-PRS 410 received, the UE 404 or an LMF associated with the UE 404 may identify the base station 406's position with respect to the UE 404. The multi-RTT measurement mechanism may be initiated by the LMF that is associated with the base station 406/408 and/or the UE 404. A base station may configure UL-SRS resources to a UE via radio resource control (RRC) signaling. In some examples, the UE and the base station (or TRPs of the base station) may report the multi-RTT measurements to the LMF, and the LMF may estimate the UE's position based on the reported multi-RTT measurements.

In other examples, a UE's position may be estimated based on multiple antenna beam measurements, where a downlink angle of departure (DL-AoD) and/or uplink angle of arrival (UL-AoA) of transmissions between a UE and one or more base stations/TRPs may be used to estimate the UE's position and/or the UE's distance with respect to each base station/TRP. For example, referring back to FIG. 4, with regard to the DL-AoD, the UE 404 may perform reference signal received power (RSRP) measurements for a set of DL-PRS 416 transmitted from multiple transmitting beams (e.g., DL-PRS beams) of a base station 408, and the UE 404 may provide the DL-PRS beam measurements to a serving base station (or to the LMF associated with the base station). Based on the DL-PRS beam measurements, the serving base station or the LMF may derive the azimuth angle (e.g., $\Phi$) of departure and the zenith angle (e.g., $\theta$) of departure for DL-PRS beams of the base station 408. Then, the serving base station or the LMF may estimate the UE 404's position with respect to the base station 408 based on the azimuth angle of departure and the zenith angle of departure of the DL-PRS beams. Similarly, for the UL-AoA, a UE's position may be estimated based on UL-SRS beam measurements measured at different base stations, such as at the base stations 402. Based on the UL-SRS beam measurements, a serving base station or an LMF associated with the serving base station may derive the azimuth angle of arrival and the zenith angle of arrival for UL-SRS beams from the UE, and the serving base station or the LMF may estimate the UE's position and/or the UE distance with respect to each of the base stations based on the azimuth angle of arrival and the zenith angle of arrival of the UL-SRS beams.

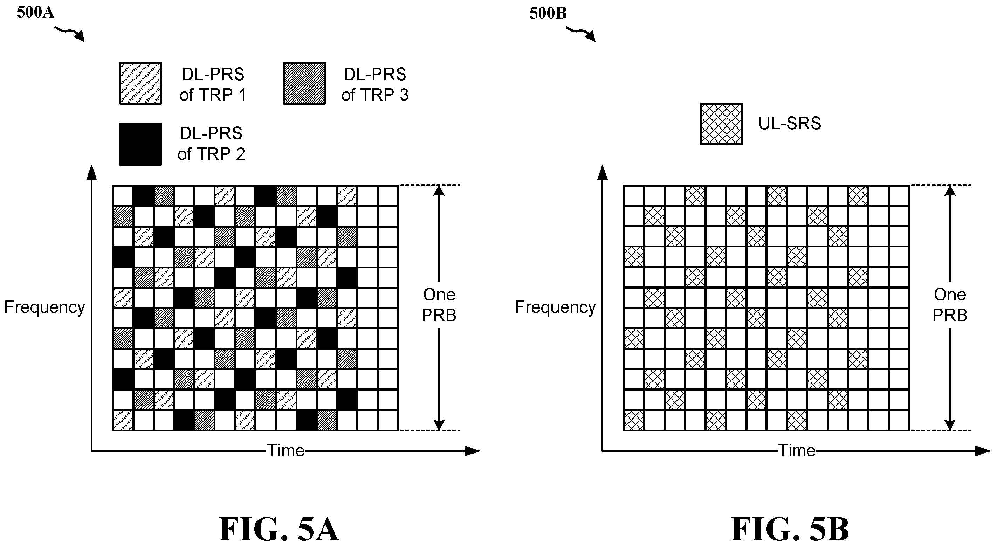

FIG. 5A is a diagram 500A illustrating an example of DL-PRS transmitted from multiple TRPs/base stations. In one example, a serving base station may configure DL-PRS to be transmitted from one or more TRPs/base stations within a slot or across multiple slots. If the DL-PRS is configured to be transmitted within a slot, the serving base station may configure the starting resource element in time and frequency from each of the one or more TRPs/base stations. If the DL-PRS is configured to be transmitted across multiple slots, the serving base station may configure gaps between DL-PRS slots, periodicity of the DL-PRS, and/or density of the DL-PRS within a period. The serving base station also may configure the DL-PRS to start at any physical resource block (PRB) in the system bandwidth. In one example, the system bandwidth may range from 24 to 276 PRBs in steps of 4 PRBs (e.g., 24, 28, 32, 36, etc.). The serving base station may transmit the DL-PRS in PRS beams, where a PRS beam may be referred to as a "PRS resource" and a full set of PRS beams transmitted from a TRP on a same frequency may be referred to as a "PRS resource set" or a "resource set of PRS," such as described in connection with FIG. 4. As shown by FIG. 5A, the DL-PRS transmitted from different TRPs and/or from different PRS beams may be multiplexed across symbols or slots.

In some examples, when more RTT and/or angle measurements (e.g., azimuth and zenith angle measurements) based on the DL-PRS are collected (e.g., by an LMF through the base station(s) and/or the UE), the accuracy for the UE's positioning may also increase. As DL-PRS measurements may be collected per PRS resource, repeated transmission of PRS resources from TRPs/base stations may enable more DL-PRS measurements and/or continuous measurements of DL-PRS at the UE. A serving base station may configure the amount and the type of PRS resource repetition for a UE, such as using parameters that configure the gaps between PRS resources (e.g., $T_{gap}^{PRS}$ ) and configure a number of resource repetition (e.g., $T_{rep}^{PRS}$ ) within a period of a resource set (e.g., $T_{per}^{PRS}$ ). For example, the serving base station may configure the DL-PRS resources to repeat up to thirty-two (32) times within a resource set period, either in consecutive slots or with a configurable gap between repetitions. The serving base station may also configure the period of the resource set (e.g., $T_{per}^{PRS}$ ), which may range from 4 to 10,240 milliseconds, and the slot offset (e.g., $T_{offset}^{PRS}$ ), which may range from 0 to $T_{per}^{PRS} - 1$, for the UE through a higher-layer parameter (e.g., a *dl-PRS-Periodicity-and-ResourceSet-SlotOffset-r16* parameter), etc. Based on the configuration, the number of DL-PRS measurements a UE may be able to perform in a period or duration may be estimated. For example, for 30 kHz subcarrier spacing, a minimum measuring instance periodicity may be eight (8) slots, which may equal to four (4) milliseconds. If the minimum reporting period is configured to be one (1) second (e.g., 1000 milliseconds), a UE may have up to 250 measuring instances (e.g., 1000 / 4) to perform DL-PRS measurements.

In some examples, a base station may configure or request a UE to provide periodic location information reporting. The base station may indicate to the UE a number of periodic location information reports requested by the base station (e.g., via a *reportingAmount* parameter), which may be 2, 4, 8, 16, 32, 64, 128, or an infinite/indefinite number of reports. If the base station requests the UE to provide an infinite/indefinite number of reports (e.g., *reportingAmount* = infinite/indefinite), the UE may continue to provide the periodic location information reporting until the base station informs the UE to abort, such as by transmitting an abort message to the UE. The base station may also indicate to the UE a time interval between location information reports transmitted from the UE, and a response time for the first location information report, where the time interval may be 1, 2, 4, 8, 10, 16, 20, 32, 64, and/or 128 seconds.

Referring back to FIG. 5A, each symbol of the DL-PRS may be configured with a comb-structure in frequency, where the DL-PRS from a base station or a TRP may occupy every $N^{th}$ subcarrier. The comb value $N$ may be configured to be 2, 4, 6, or 12. The length of the PRS within one slot may be a multiple of $N$ symbols and the position of the first symbol within a slot may be flexible as long as the slot consists of at least $N$ PRS symbols. The diagram 500A is an example of a comb-6 DL-PRS configuration, where the pattern for the DL-PRS from different TRPs/base stations may be repeated after six (6) symbols.

FIG. 5B is a diagram 500B illustrating an example of UL-SRS transmitted from a UE. In one example, the UL-SRS from a UE may be configured with a comb-4 pattern, where the pattern for UL-SRS may be repeated after four (4) symbols. Similarly, the UL-SRS may be configured in an SRS resource of an SRS resource set, where each SRS resource may correspond to an SRS beam, and the SRS resource sets may correspond to a collection of SRS resources (e.g., beams) configured for a base station/TRP. In some examples, the SRS resources may span 1, 2, 4, 8, or 12 consecutive OFDM symbols. In other examples, the comb size for the UL-SRS may be configured to be 2, 4, or 8.

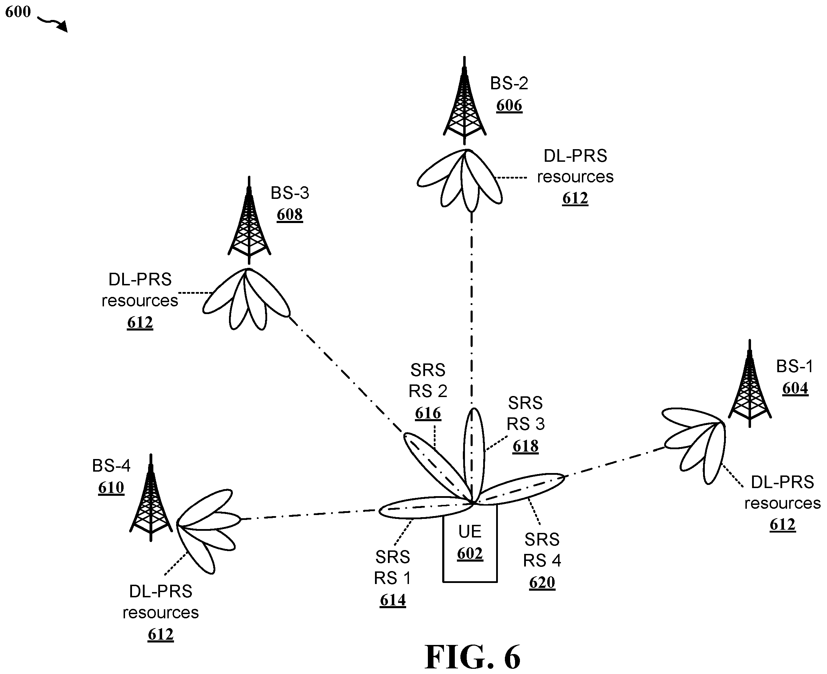

FIG. 6 is a diagram 600 illustrating an example of estimating a UE's position based on multi-RTT measurements from multiple base stations or TRPs. A UE 602 may be configured by a serving base station to decode DL-PRS resources 612 that correspond to and are transmitted from a first base station (BS) 604, a second BS 606, a third BS 608, and a fourth BS 610. The UE 602 may also be configured to transmit UL-SRSs on a set of UL-SRS resources, which may include a first SRS resource 614, a second SRS resource 616, a third SRS resource 618, and a fourth SRS resource 620, such that the serving cell(s), e.g., the first BS 604, the second BS 606, the third BS 608, and the fourth BS 610, and as well as other neighbor cell(s), may be able to measure the set of the UL-SRS resources transmitted from the UE 602. For multi-RTT measurements based on DL-PRS and UL-SRS, as there may be an association between a UE's measurement for the DL-PRS and a base station's measurement for the UL-SRS, the smaller the gap is between the UE's DL-PRS measurement and the UE's UL-SRS transmission, the better the accuracy may be for estimating the position of the UE and/or the UE's distance with respect to each BS.

In some examples, due to the processing capability and/or configuration of a UE, the UE may not be able to measure one or more DL-PRS resources at a same time or in a configured duration. For example, different UEs may apply different strategies and/or mechanisms for measuring DL-PRS resources. Thus, how UEs measure the DL-PRS resources may be implementation dependent, and may be different for various UEs. As the UL-SRS transmission/resource may be preconfigured for a UE, and may not be dynamically updated and/or changed for the UE, some UL-SRS transmissions may not be efficient/beneficial for estimating the position of the UE based on multi-RTT measurements if the UE is unable to measure the corresponding DL-PRS in one or more measuring instances. For example, referring to FIG. 6, the UE 602 may have the capability to measure one DL-PRS resource from one BS at one measuring instance. If sixteen (16) DL-PRS resources are transmitted to the UE 602 from the BSs 604, 606, 608, and 610, it may take sixteen measuring instances for the UE 602 to complete the measurements for the sixteen DL-PRS resources. In other words, when the UE 602 is measuring a DL-PRS resource from one of the BSs, the UE 602 may not be able to measure the DL-PRS resources from other BSs. If the UE 602 is unable to measure the DL-PRS resources in one or more measuring instances, the corresponding UL-SRS transmitted from the UE 602 may not be efficient/beneficial for estimating the position of the UE. Similarly, if a base station/BS or the LMF associated with the base station is unable measure one or more UL-SRS resources at a same time or in a configured duration, some DL-PRS transmissions may not be efficient/beneficial for estimating the position of the UE if the base station/BS is unable to measure the corresponding UL-SRS for which the UE reports measurements in one or more measuring instances.

Aspects presented herein may improve positioning based on multi-RTT measurements for a UE and a base station. Aspects presented herein may enable a base station/LMF and a UE to communicate with each other to indicate one or more DL-PRS and/or UL-SRS resources in which the UE and/or the base station are measuring or are prioritized for measuring, such that the correct pairs of DL-PRS/UL-SRS resources may be measured by the UE and/or the base station to improve the performance and accuracy of the positioning based on the multi-RTT measurements.

In one aspect of the present disclosure, if a DL-PRS measurement occasion occurs before an UL-SRS transmission occasion, a UE may be configured to indicate a list of DL-PRS resources the UE plans or is configured to measure and/or has measured in a measurement occasion to a base station or an LMF associated with the base station. In response to the list of PRS resources, the base station (or TRPs of the base station) may measure the UL-SRS corresponding to the DL-PRS which the UE has measured such that the measurement for a pair of DL-PRS and UL-SRS may be completed in a measuring occasion.

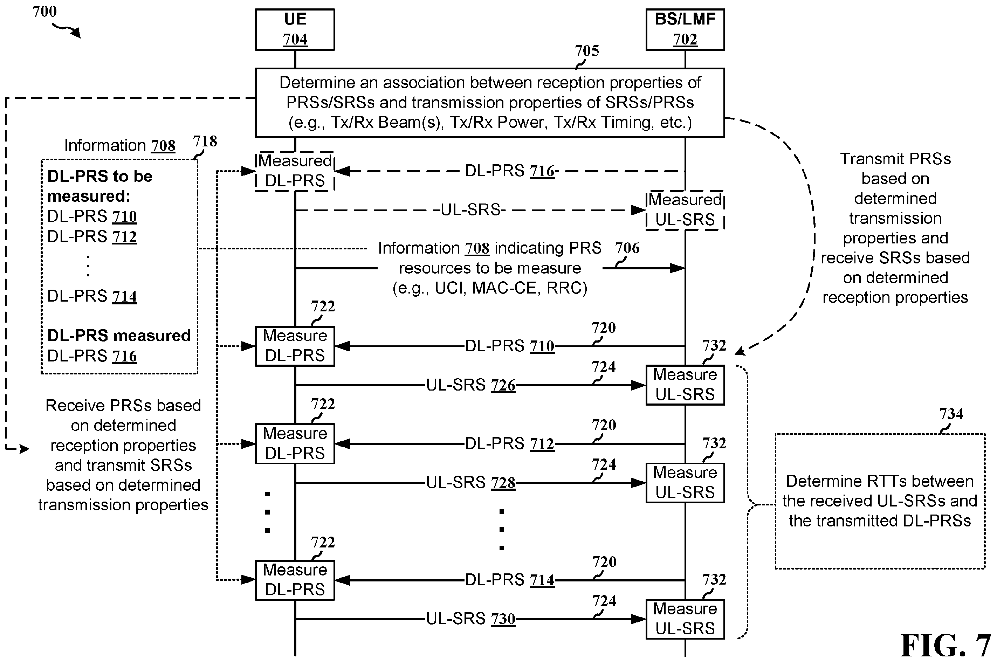

FIG. 7 is a communication flow 700 illustrating an example of a UE communicating with a base station regarding DL-PRS resources to be measured according to aspects of the present disclosure. Optional aspects may be illustrated in dashed lines.

At 705, a UE 704 and/or a base station 702 (or an LMF associated with the base station 702) may determine an association between PRSs and SRSs. For example, the UE 704 may determine an association between one or more reception properties of PRS resource(s) and one or more transmission properties of SRS resource(s), and the base station 702 may determine an association between one or more reception properties of SRS resource(s) and one or more transmission properties of SRS resource(s), etc.

In one example, the one or more reception properties may be associated with at least one receive beam which the UE 704 may use for receiving PRSs in PRS resource(s) or the base station 702 may use for receiving SRSs in SRS resource(s), and the one or more transmission properties may be associated with at least one transmit beam which the UE 704 may use for transmitting SRSs in SRS resource(s) or the base station 702 may use for transmitting PRSs in PRS resource(s), such that the at least one receive beam and the at least one transmit beam may have a same set of associated beam directions. For example, the one or more reception properties at the UE 704 may indicate that if the UE 704 receives PRSs using one or more receive beams at the UE 704, the UE 704 may transmit corresponding SRSs using one or more transmit beams that correspond to the one or more receive beams, such that the one or more receive beams and the one or more transmit beams may have a same set of associated beam directions. Similarly, the one or more reception properties at the base station 705 may indicate that if the base station 702 transmits PRSs using one or more transmit beams at the base station 702, the base station 702 may receive corresponding SRSs using one or more receive beams that correspond to the one or more transmit beams, such that the one or more transmit beams and the one or more receive beams may have a same set of associated beam directions.

In another example, the one or more reception properties may be associated with a reception power of the PRSs/SRSs and the one or more transmission properties may be associated with a transmission power of the SRSs/PRSs. For example, the one or more reception properties may indicate that if the UE 704 receives PRSs from the base station 702 with a measured power (e.g., a measured RSRP) below a threshold, the UE 704 may increase the transmission power for the SRSs. Similarly, if the base station 702 receives the SRSs from the UE 704 with a measured power below a threshold, the base station 702 may increase the transmission power for the PRSs, etc.

In another example, the one or more reception properties may be associated with a reception timing of the PRSs/SRSs and the one or more transmission properties may be associated with a transmission timing of the SRSs/PRSs. For example, the one or more reception properties may indicate that if the UE 704 has not received PRSs from the base station 702, the UE 704 may not transmit the corresponding SRSs to the base station 702 or the UE 704 may apply a timing offset to the transmission of SRSs, etc.

At 706, the UE 704 may transmit information 708 to the base station 702 indicating one or more PRS resources that the UE 704 is going to or plans to (e.g., is configured to) measure at the UE 704 (e.g., through at least one of the receive beams at the UE 704). For example, as illustrated at 718, the information 708 may indicate that the UE 704 plans or is configured to measure DL-PRS resources 710, 712, and 714, and/or that the UE 704 has measured a DL-PRS resource 716, etc., in a given measuring occasion. The UE 704 may autonomously determine the one or more PRS resources that the UE 704 is going to measure (or is configured to measure) from a set of PRS resources without receiving an input from the base station 702. For example, the UE 704 may previously measure a set of PRS resources from the base station 702, and based at least in part on the previous measurement, the UE 704 may select a subset of PRS resources from the set of PRS resources as the one or more PRS resources that the UE 704 is going to measure in the given measuring occasion.

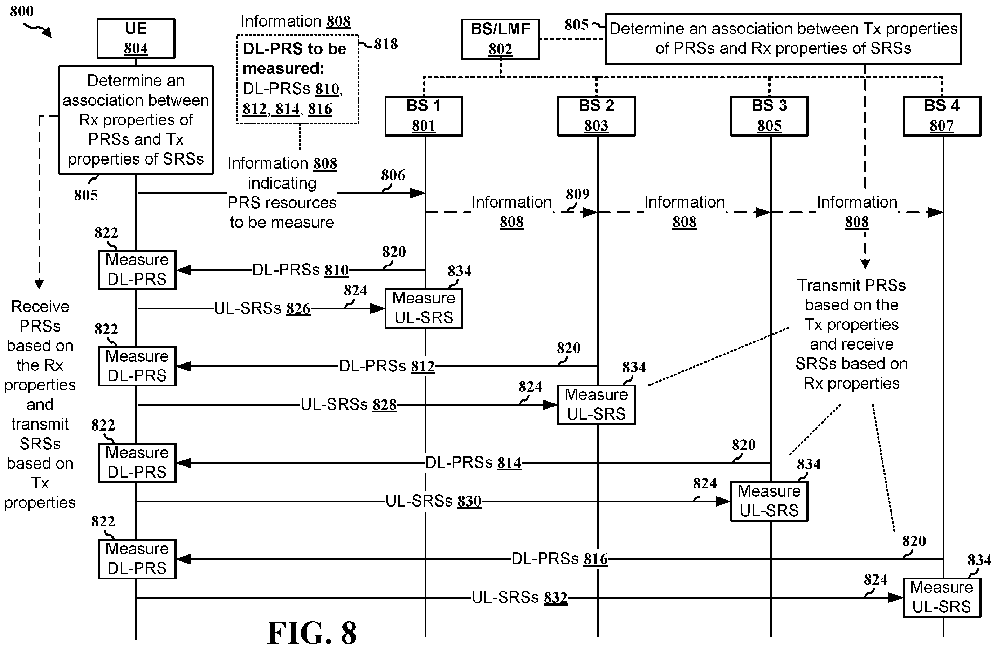

In one example, the UE 704 may transmit the information 708 to the base station in a lower layer message, such as an uplink control information (UCI) and/or a medium access control (MAC) control element (CE) (MAC-CE). In another example, the UE 704 may transmit the information 708 to the base station in an upper layer message, such as via radio resource control (RRC) signaling. The base station 702 may forward the information 708 to other base station(s) and/or TRP(s) that are associated with the positioning session of the UE 704 (e.g., as illustrated in FIG. 8). In one example, the base station 702 may be a serving base station, and the base station 702 may receive the information 708 directly from the UE 704. In another example, the base station 702 may not be a serving base station for the UE 704, and the base station 702 may receive the information 708 indirectly from another base station, such as from at least one serving base station of the UE 704.

At 720, the base station 702 may transmit DL-PRSs on one or more DL-PRS resources based on one or more transmission properties determined at 705. For example, the base station 702 may transmit the one or more DL-PRSs using a specified set of transmit beams (e.g., based on beams previously used for receiving UL-SRSs in prior measurement occasions), using a specified transmission power (e.g., based on a reception power of UL-SRSs received in prior measurement occasions), and/or using a specified transmission timing. The one or more DL-PRS resources may include the DL-PRS resources 710, 712, and 714.

At 722, based on the information 708 transmitted, the UE 704 may measure DL-PRSs received from the base station 702 on the DL-PRS resources based on one or more reception properties determined at 705. For example, the UE 704 may measure DL-PRSs received on the DL-PRS resources 710, 712, and 714 as indicated in the information 708. In some examples, the information 708 may be determined based on the capability of the UE 704 (e.g., based on the UE capability), such as how many DL-PRSs or a maximum number of DL-PRSs may be measured by the UE 704 in a measuring occasion. After the UE 704 transmits the information 708 to the base station 702, the UE 704 may prioritize its measurements for the DL-PRSs based at least in part on the transmitted information 708. For example, the UE 704 may prioritize its measurements for the DL-PRSs received in DL-PRS resources 710, 712, and 714 as indicated in the information 708.

At 724, after the UE 704 measures the DL-PRSs transmitted from the base station 702, the UE 704 may transmit to the base station 702 one or more UL-SRSs on UL-SRS resources based on one or more transmission properties determined at 705. For example, the UE 704 may transmit the one or more UL-SRSs using a specified set of transmit beams that are based on receive beams used for receiving the DL-PRSs (e.g., beams having same or associated direction(s)), using a specified transmission power that is based on the reception power of the DL-PRSs, and/or using a specified transmission timing based on the reception timing of the DL-PRSs, etc. The UL-SRS resources may include UL-SRS resources 726, 728, and 730, which may correspond to the DL-PRS resources 710, 712, and 714 in which the UE 704 has measured respectively, as indicated by the UE 704 in the information 708. In some examples, the at least one transmit/SRS beam and the at least one receive beam (e.g., the beam used by the UE 704 for receiving corresponding DL-PRSs) may have a same set of associated beam directions. For example, if the UE 704 uses a first receiving beam to receive DL-PRSs transmitted on the DL-PRS resource 710, the UE 704 may use a transmitting/SRS beam that has a same beam direction as the first receiving beam to transmit UL-SRSs using the UL-SRS resource 726. Similarly, if the UE 704 uses a second receiving beam to receive DL-PRS transmitted on the DL-PRS resource 712, the UE 704 may use a transmitting/SRS beam that has a same beam direction as the second receiving beam to transmit UL-SRS using the UL-SRS resource 728, etc.

At 724, the base station 702 may receive the UL-SRSs transmitted from the UE 704 on UL-SRS resources based on one or more reception properties determined at 705, such as receiving the UL-SRSs using specified receive beam(s). The UL-SRS resources may include the UL-SRS resources 726, 728, and 730, which may correspond to the DL-PRS resources 710, 712, and 714 in which the base station 702 has transmitted, respectively. In some examples, the at least one transmitting beam (e.g., the beam used for transmitting DL-PRSs) and the at least one receive beam (e.g., the beam used for receiving UL-SRSs) may have a same set of associated beam directions. For example, if the base station 702 uses a first transmitting beam to transmit DL-PRSs on the DL-PRS resource 710, the base station 702 may use a receiving beam that has a same beam direction as the first transmitting beam to receive the UL-SRSs transmitted on the UL-SRS resource 726. Similarly, if the base station 702 uses a second transmitting beam to transmit DL-PRSs on the DL-PRS resource 714, the base station 702 may use a receiving beam that has a same beam direction as the second transmitting beam to receive the UL-SRSs transmitted on the UL-SRS resource 730, etc.

At 732, based on the received UL-SRSs and the information 708, the base station 702 may measure the UL-SRSs, or give priorities to measurements of the UL-SRSs, that correspond to the DL-PRSs in which the UE 704 has measured, so that correct pairs of UL-SRS and DL-PRS are measured and completed in one or more measuring occasions. For example, as the information 708 indicates that the UE 704 is configured or planned to measure the DL-PRSs transmitted on the DL-PRS resources 710, 712, and 714, the base station 702 may prioritize its measurement on the corresponding UL-SRSs transmitted on the UL-SRS resources 726, 728, and 730 respectively, such that multiple pairs of DL-PRS/UL-SRS measurements may be completed in a measuring occasion at the base station 702.

At 734, the base station 702 or an LMF associated with the base station 702 may determine RTTs between the received UL-SRSs and the transmitted DL-PRSs, and the base station 702 or the LMF may determine or estimate the position of the UE 704 with respect to the base station 702 based at least in part on the determined RTTs, such as described in connection with FIG. 4.

In one example, the information 708 may be transmitted before the UE 704 measures the PRSs received from the base station 702 (e.g., at 722). In such an example, the UE 704 may determine that a quality metric for the one or more PRS resources in the information 708 exceeds a threshold during a previous measurement occasion, and that the information 708 may indicate the one or more PRS resources that have the quality metric exceeding the threshold. For example, the quality metric may include an RSRP, a line of sight (LoS) probability, and/or a timing delay calibration value, etc. In other words, the information 708, or the PRS resources in which the UE 704 plans or is configured to measure may be determined based at least in part on one or more prior measurements. For example, the UE 704 may determine that PRSs received via a set of PRS resources have a highest RSRP measurement and the UE 704 may include the set of PRS resources in the information 708.

In another example, the UE 704 may transmit the information 708 indicating the one or more PRS resources in which the UE 704 plans to measure after the PRSs received from the base station 702 are measured. In such an example, the UE 704 may determine a quality metric for the one or more PRS resources in the information 708. Then, the UE 704 may determine a subset of the one or more PRS resources that have a quality metric that exceeds a threshold, such that the information 708 may indicate the subset of one or more PRS resources that have the quality metric exceeding the threshold. Similarly, the quality metric may include at least one of an RSRP, a line of sight probability, or a timing delay calibration value, etc. For example, if the UE 704 receives PRSs from the base station 702 before transmitting the information 708, the UE 704 may measure the received PRSs, and the UE 704 may select one or more PRS resources associated with the measured PRSs in the information 708. In other words, the UE 704 may determine the one or more PRS resources to be included in the information 708 based on the RSRP, the line of sight probability, or the timing delay calibration value of the PRSs received before transmission of the information 708. In another example, the UE 704 may be configured to transmit the information 708 (e.g., before or after the PRS is measured) within a configured duration of the measurement of the PRSs. For example, the UE 704 may be configured to transmit the information 708 within 5 ms after measuring PRSs received from the base station 702.

FIG. 8 is a communication flow 800 illustrating an example of a UE communicating with multiple base stations regarding DL-PRS resources to be measured according to aspects of the present disclosure. Optional aspects may be illustrated in dashed lines.

At 809, a UE 804 and/or a serving base station 802 (or an LMF associated with the serving base station 802) may determine an association between PRSs and SRSs. For example, the UE 804 may determine an association between one or more reception properties of PRS resource(s) and one or more transmission properties of SRS resource(s), and the serving base station 802 may determine an association between one or more reception properties of SRS resource(s) and one or more transmission properties of SRS resource(s), etc.

In one example, the one or more reception properties may be associated with at least one receive beam in which the UE 804 may use for receiving PRSs in PRS resource(s) or the serving base station 802 (or non-serving base stations) may use for receiving SRSs in SRS resource(s), and the one or more transmission properties may be associated with at least one transmit beam in which the UE 804 may use for transmitting SRSs in SRS resource(s) or the serving base station 802 (or non-serving base stations) may use for transmitting PRSs in PRS resource(s), such that the at least one receive beam and the at least one transmit beam may have a same set of associated beam directions. For example, the one or more reception properties at the UE 804 may indicate that if the UE 804 receives PRSs using one or more receive beams at the UE 804, the UE 804 may transmit SRSs using one or more transmit beams that correspond to the one or more receive beams, such that the one or more receive beams and the one or more transmit beams may have a same set of associated beam directions. Similarly, the one or more reception properties at the serving base station 802 may indicate that if the serving base station 802 transmits PRSs using one or more transmit beams at the serving base station 802, the serving base station 802 may receive SRSs using one or more receive beams that correspond to the one or more transmit beams, such that the one or more transmit beams and the one or more receive beams may have a same set of associated beam directions.

In another example, the one or more reception properties may be associated with a reception power of the PRSs/SRSs and the one or more transmission properties may be associated with a transmission power of the SRSs/PRSs. For example, the one or more reception properties may indicate that if the UE 804 receives PRSs from the serving base station 802 with a measured power (e.g., a measured RSRP) below a threshold, the UE 804 may increase the transmission power for the SRSs.

Similarly, if the serving base station 802 (or other non-serving base station(s)) receives the SRSs from the UE 804 with a measured power below a threshold, the base station 802 (or other non-serving base station(s)) may increase the transmission power for the PRSs, etc.

In another example, the one or more reception properties may be associated with a reception timing of the PRSs/SRSs and the one or more transmission properties may be associated with a transmission timing of the SRSs/PRSs. For example, the one or more reception properties may indicate that if the UE 804 has not received PRSs from the serving base station 802 (or other non-serving base station(s)), the UE 804 may not transmit the corresponding SRSs to the base station 802 (or other non-serving base station(s)) or the UE 804 may apply a timing offset to the transmission of SRSs, etc.

At 806, the UE 804 may transmit information 808 to the serving base station 802 or the LMF associated with the serving base station 802 through one of the base stations that are associated with a positioning session of the UE 804. For example, the UE 804 may establish a positioning session with a first BS 801, a second BS 803, a third BS 805, and a fourth BS 807, where each of the BSs may be a serving or a non-serving base station for the UE 804. In one example, the serving base station 802 may be one of the BSs 801, 803, 805, or 807 (e.g., the serving base station 802 may be the first BS 801). In another example, the serving base station 802 may be different than the BSs 801, 803, 805, or 807. The communication between the UE 804 and the serving base station 802 or the LMF may be forwarded to other non-serving base stations. For example, if the first BS 801 is a serving base station of the UE 804 (e.g., the first BS 801 is the serving base station 802) while the second BS 803, the third BS 805, and the fourth BS 807 are not serving base stations of the UE 804, the UE 804 may transmit the information 808 to the first BS 801 indicating one or more PRS resources that the UE 804 is going/plan to measure at the UE 804 or has measured. Then, the first BS 801 may forward the information 808 to the second BS 803, the third BS 805, and/or the fourth BS 807.

In one example, as illustrated at 818, the information 808 may indicate that the UE 804 plans or is configured to measure DL-PRSs 810, 812, 814, and 816 that are transmitted from the first BS 801, the second BS 803, the third BS 805, and the fourth BS 807, respectively. The first BS 801, the second BS 803, the third BS 805, and the fourth BS 807 (collectively referred to as the "associated BSs") in FIG. 8 may correspond to the first BS 604, the second BS 606, the third BS 608, and the fourth BS 610 in FIG. 6. The UE 804 may transmit the information 808 to the first BS 801 in at least one of UCI, a MAC-CE, and/or RRC signaling. Then, at 809, the first BS 801 or the base station 802 may forward the information 808 to other BSs that are associated with the positioning session of the UE 804, such as the second BS 803, the third BS 805, and/or the fourth BS 807, etc. The UE 804 may autonomously determine the one or more PRS resources that the UE 804 is going to measure (e.g., is configured to measure) from a set of PRS resources without receiving an input from the serving base station 802. For example, the UE 804 may previously measure a set of PRS resources from one or more of the serving and/or non-serving base stations, and based at least in part on the measurement, the UE 804 may select a subset of PRS resources from the set of PRS resources as the one or more PRS resources that the UE 804 is going to measure.

At 820, each of the first BS 801, the second BS 803, the third BS 805, and the fourth BS 807 may transmit one or more DL-PRSs based on one or more transmission properties determined at 809. The one or more transmission properties may include a specified set of transmit beams, a specified transmission power, and/or use a specified transmission timing, etc. For example, the first BS 801 may transmit a set of DL-PRSs that includes the DL-PRSs 810 to the UE 804, the second BS 803 may transmit a set of DL-PRSs that includes the DL-PRSs 812 to the UE 804, the third BS 805 may transmit a set of DL-PRSs that includes the DL-PRSs 814 to the UE 804, and the fourth BS 807 may transmit a set of DL-PRSs that includes the DL-PRSs 816 to the UE 804, etc. As illustrated by FIG. 5A, DL-PRSs transmitted from different BSs may be multiplexed with each other based on a comb pattern.

At 822, based on the information 808 transmitted, the UE 804 may measure DL-PRSs (or may prioritize its measurements on DL-PRSs) received from the first BS 801, the second BS 803, the third BS 805, and the fourth BS 807 on the DL-PRS resources based on one or more reception properties determined at 705. In some examples, the information 808 may be determined based on the capability of the UE 804, such as how many DL-PRSs or a maximum number of DL-PRSs may be measured by the UE 804 in a measuring occasion.

At 824, after the UE 804 measures the DL-PRSs transmitted from the associated BSs, the UE 804 may transmit to the associated BSs one or more UL-SRSs based on one or more transmission properties determined at 809. For example, the UE 804 may transmit the one or more UL-SRSs using a specified set of transmit beams that are based on receive beams used for receiving the DL-PRSs (e.g., beams having same or associated direction(s)), using a specified transmission power that is based on the reception power of the DL-PRSs, and/or using a specified transmission timing based on the reception timing of the DL-PRSs, etc. The one or more UL-SRSs may include UL-SRSs 826, 828, 830, and 832, which may correspond to the DL-PRSs 810, 812, 814, and 816 in which the UE 804 may have measured respectively, as indicated by the UE 804 in the information 808. In some examples, the at least one transmit/SRS beam and the at least one receive beam (e.g., the beam used by the UE 804 for receiving a corresponding DL-PRS from one of the associated BSs) may have a same set of associated beam directions. For example, if the UE 804 uses a first receiving beam for receiving the DL-PRSs 810 from the first BS 801, the UE 804 may use a transmitting/SRS beam with a same beam direction as the first receiving beam to transmit the corresponding UL-SRSs 826 to the first BS 801. Similarly, if the UE 804 uses a second receiving beam for receiving the DL-PRSs 812 from the second BS 803, the UE 804 may use a transmitting/SRS beam with a same beam direction as the second receiving beam to transmit the corresponding UL-SRSs 828 to the second BS 803, etc. As such, in some examples, as shown by FIG. 6, a UE may use different beams with different transmitting/receiving directions to communicate with different BSs and/or base stations at different directions with respect to the UE.

At 824, one or more of the associated BSs may receive the UL-SRSs transmitted from the UE 804 based on one or more reception properties determined at 809, such as receiving the UL-SRSs using specified receive beam(s), reception power, and/or timing, etc. For example, the first BS 801 may receive UL-SRS 826 through at least one receive beam at the first BS 801, the third BS 805 may receive UL-SRS 830 through at least one receive beam at the third BS 805, etc. In some examples, the beam used by a BS for transmitting the DL-PRS(s) and the beam used by the BS for receiving corresponding UL-SRS(s) may have a same set of associated beam directions. For example, if the first BS 801 uses a first transmitting beam to transmit the DL-PRSs 810, the first BS 801 may use a receiving beam that has a same beam direction as the first transmitting beam to receive the UL-SRSs 826. Similarly, if the fourth BS 807 uses a second transmitting beam to transmit the DL-PRSs 816, the fourth BS 807 may use a receiving beam that has a same beam direction as the second transmitting beam to receive the UL-SRSs 826, etc.

At 834, based on the received UL-SRSs and the information 808, the first BS 801, the second BS 803, the third BS 805, and the fourth BS 807 may measure the received UL-SRSs or may give priorities to measurements of the UL-SRSs that correspond to the DL-PRSs in which the UE 804 has measured (e.g., as indicated in the information 808), such that correct pairs of DL-PRS/UL-SRS may be measured in one or more measuring occasions or in a given duration. For example, as the information 808 may indicate that the UE 804 is configured/going to measure the DL-PRSs 810, 812, 814, and 816, the first BS 801 may prioritize its measurement on the corresponding UL-SRSs 826, the second BS 803 may prioritize its measurement on the corresponding UL-SRSs 828, the third BS 805 may prioritize its measurement on the corresponding UL-SRSs 830, and the fourth BS 807 may prioritize its measurement on the corresponding UL-SRSs 832, etc.

Based on the DL-PRSs transmitted from the associated BSs and the UL-SRS received at the associated BSs, the serving base station 802 or the LMF associated with the serving base station 802 may calculate, collect, and/or derive RTTs between the received UL-SRSs and the transmitted DL-PRSs at each of the associated BSs, and the base station 802 or the LMF may determine or estimate the position of the UE 804 or the UE 804's distance with respect to each of the associated BSs, such as described in connection with FIG. 4.

In one aspect of the present disclosure, if a UL-SRS measurement occasion occurs before an DL-PRS transmission occasion, a base station or an LMF associated with the base station may indicate a list of UL-SRS resources (or the corresponding DL-PRS resources) to the UE. In one example, the list of UL-SRS resources (or the corresponding DL-PRS resources) may be based on one or more UL-SRSs received by a base station/TRP with a measurement (e.g., RSRP) above a threshold (e.g., in one or more prior measurement occasions). In response to the list of UL-SRS resources (or the corresponding DL-PRS resources), the UE may prioritize its measurements on corresponding DL-PRS resources in one or more measurement occasions, such that the measurement for correct pairs of DL-PRS and UL-SRS may be completed in the one or more measuring occasions.

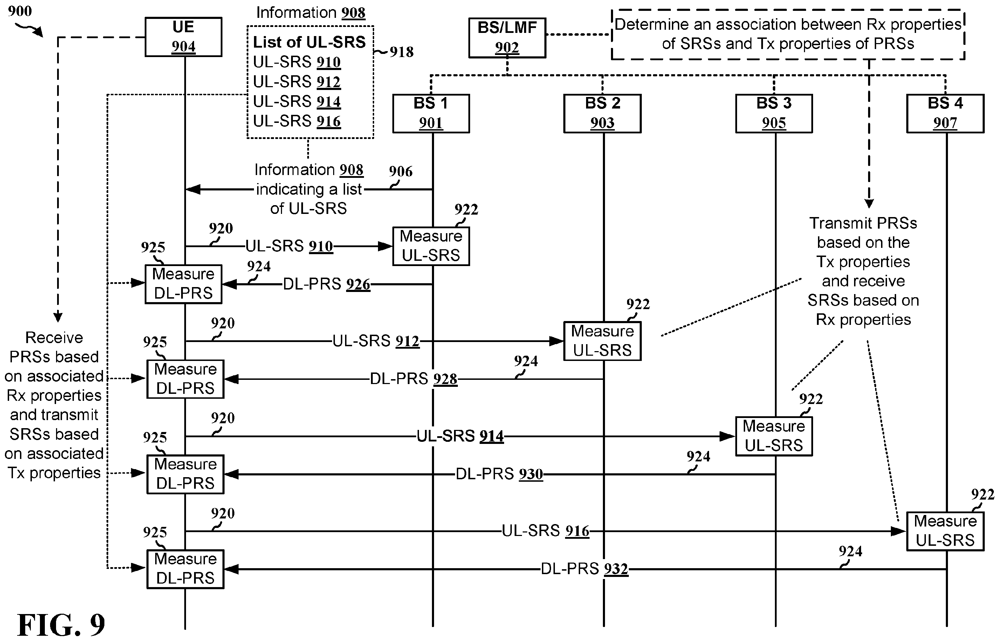

FIG. 9 is a communication flow 900 illustrating an example of a base station indicating a list of UL-SRS to a UE for the UE to prioritize corresponding DL-PRS measurements according to aspects of the present disclosure. Optional aspects may be illustrated in dashed lines.

At 906, a serving base station 902 or an LMF associated with the serving base station 902 may transmit information 908 to a UE 904 indicating one or more SRS resources that the UE 904 is configured to transmit or indicating one or more PRS resources that correspond to the one or more SRS resources (e.g., based on one or more transmission properties) at the UE 904. For example, as illustrated at 918, the information 908 may be transmitted from one of serving and/or non-serving base stations that are associated with the positioning session of the UE 904, where the information 908 may indicate a list of UL-SRS in which the UE 904 may prioritize its measurements or a list of DL-PRSs that correspond to the list of UL-SRS. In one example, the first BS 901 may transmit the information 908 after the SRSs are measured within a configured duration of the measurement of the SRSs. For example, the first BS 901 may be configured to transmit the information 908 within two (2) ms after the SRSs are measured.

For example, as illustrated at 918, the information 908 may indicate a list of UL-SRS resources (or a list of corresponding DL-PRS) which may include the UL-SRS resources 910, 912, 914, and 916 (or the corresponding DL-PRS resources 926, 928, 930, and 932) in which the base station 902 may consider as having good or suitable measurements (e.g., or channel quality), such as having RSRP measurements above a threshold (discussed in details below). For example, in one or more prior UL-SRS transmission occasions from the UE 904, a first BS 901 of the base station 902 may determine that the UL-SRSs received on the UL-SRS resource 910 have better measurements (e.g., with RSRP measurements above a threshold) at the first BS 901, a second BS 903 of the base station 902 may determine that the UL-SRSs received on the UL-SRS resource 912 have better measurements at the second BS 903, a third BS 905 of the base station 902 may determine that the UL-SRSs received on the UL-SRS resource 914 have better measurements at the third BS 905, and a fourth BS 907 of the base station 902 may determine that the UL-SRSs received on the UL-SRS resources 916 have better measurements at the fourth BS 907, etc. In one example, the serving base station 902 may be one of the BSs 901, 903, 905, or 907 (e.g., the serving base station 902 may be the first BS 901). In another example, the serving base station 902 may be different than the BSs 901, 903, 905, or 907. The communication between the UE 904 and the serving base station 902 or the LMF may be forwarded to other non-serving base stations. In another example, the base station may determine the information 908 (e.g., the list of SRS resources) by determining a quality metric for the one or more SRS resources, and determining the subset of SRS resources based on the SRS resources in the subset having a quality metric exceeding a threshold, where the quality metric may include or be associated with at least one of an RSRP, a LoS probability, or a timing delay calibration value, etc. In other words, the serving base station 902 may determine the information 908 indicating a list of UL-SRS based on the RSRP, the LoS probability, and/or the timing delay calibration value associated with SRSs received. The base station 902 may transmit the information 908 to the UE through a lower layer message, such as downlink control information (DCI) and/or a MAC-CE, and/or through an upper layer messages, such as via RRC signaling. In some examples, transmitting the information 908 via RRC signaling may take more time, and transmitting the information 908 via lower layer message(s) may be at a lower latency, which may be more beneficial.

At 920, the UE 904 may transmit UL-SRSs on a set of UL-SRS resources from one or more transmitting/SRS beams of the UE 904 based on one or more transmission properties at the UE 904, which may include the UL-SRS resources 910, 912, 914, and 916. As illustrated by FIG. 5B, the transmitted UL-SRS may be configured with a comb pattern. In one example, the UE 904 may use different transmitting beams, transmission powers, and/or transmission timings to transmit UL-SRS on different UL-SRS resources. For example, the UE 904 may use a first transmitting beam, transmission power, and/or transmission timing to transmit UL-SRSs on the UL-SRS resource 910, a second transmitting beam, transmission power, and/or transmission timing to transmit UL-SRSs on the UL-SRS resource 912, a third transmitting beam, transmission power, and/or transmission timing to transmit UL-SRSs on the UL-SRS resource 914, and a fourth transmitting beam, transmission power, and/or transmission timing to transmit UL-SRSs on the UL-SRS resource 916, etc.

At 922, one or more of the first BS 901, the second BS 903, the third BS 905, and the fourth BS 907 (collectively referred to as the "associated BSs") may receive the UL-SRSs transmitted from the UE 904 based on one or more reception properties (e.g., through at least one receive beam at the one or more BSs, based on a reception power and/or based on a reception timing, etc.). For example, the first BS 901 may receive UL-SRSs transmitted on the UL-SRS resource 910 through at least one receive beam at the first BS 901, and the third BS 905 may receive UL-SRSs transmitted on the UL-SRS resource 914 through at least one receive beam at the third BS 905, etc.

At 924, one or more the associated BSs may transmit corresponding DL-PRSs based on one or more transmission properties that are associated with one or more reception properties at the one or more BSs. For example, the first BS 901 may transmit DL-PRSs to the UE 904 in a set of DL-PRS resources that includes the DL-PRS resource 926, the second BS 903 may transmit DL-PRSs to the UE 904 in a set of DL-PRS resources that includes the DL-PRS resource 928, the third BS 905 may transmit DL-PRSs to the UE 904 in a set of DL-PRS resources that includes the DL-PRS resource 930, and the fourth BS 907 may transmit DL-PRSs to the UE 904 in a set of DL-PRS resources that includes the DL-PRS resource 932, etc. As illustrated by FIG. 5A, DL-PRSs transmitted from different BSs may be multiplexed with each other based on a comb pattern. In some examples, one or more beams used by a BS for receiving UL-SRSs from the UE 904 and one or more beams used by the BS for transmitting the DL-PRSs to the UE 904 may have a same set of associated beam directions. For example, if the first BS 901 uses a first receiving beam to receive UL-SRSs on the UL-SRS resources 910, the first BS 901 may use a transmitting beam that has a same beam direction as the first receiving beam to transmit the DL-PRSs on the DL-PRS resource 926. Similarly, if the fourth BS 907 uses a second receiving beam to receive UL-SRSs on the UL-SRS resources 910, the fourth BS 907 may use a transmitting beam that has a same beam direction as the second receiving beam to transmit the DL-PRSs on the DL-PRS resource 932, etc. In others examples, if a base station receives the UL-SRSs with a reception power (e.g., an RSRP) below a threshold, the base station may transmit the corresponding DL-PRSs with increased power.

At 925, based at least in part on the information 908, the UE 904 may prioritize its DL-PRS measurements for DL-PRSs received from one or more of the associated BSs, where the UE 904 may receive the DL-PRSs based on one or more reception properties that are associated with the one or more transmission properties at the UE (e.g., the Tx/Rx beams, the Tx/Rx powers, and/or the Tx/Rx timings, etc.). For example, if the information 908 indicates that UL-SRSs received on the UL-SRS resources 910, 912, 914, and 916 are to be measured by the UE 904 (e.g., as having better (e.g., higher quality) measurements), the UE 904 may prioritize its DL-PRS measurements on DL-PRSs that correspond to the transmitted UL-SRSs (e.g., the DL-PRSs transmitted on the DL-PRS resources 926, 928, 930, and 932, etc.). For example, the UE 904 may determine to prioritize its DL-PRS measurements when the UE 904 also receives other DL-PRSs that are not associated with the UL-SRS resources indicated in the information 908 and the UE 904 does not have the capabilities to measure them at a same time in a measuring occasion.

Based on the UL-SRSs transmitted from the UE 904 and the DL-PRSs received at the UE 904, the UE 904 may determine a time difference between the transmission of the SRSs and the reception of the PRSs, and then the UE 904 may transmit, to the serving base station 902 or other serving base station(s), information indicating the time difference in a measurement report.

While the examples illustrated in FIG. 9 show that the UE 904 prioritizes its measurements for DL-PRSs received from the first BS 901, the second BS 903, the third BS 905, and the fourth BS 907, the examples are merely for illustrative purposes. In some examples, if the UE 904's measurement capability is limited or reduced, the UE 904 may also prioritize its measurements between the first BS 901, the second BS 903, the third BS 905, and/or the fourth BS 907, such as measuring DL-PRSs from different BSs at different measuring occasions. For example, if the UE 904 is limited to measure eight (8) DL-PRSs at a measuring instance and each of the four BSs transmits at least eight (8) DL-PRSs to the UE 904 at each transmission instance, the UE 904 may be configured to measure eight DL-PRS from the first BS 901 at a first measuring instance, measure eight DL-PRS from the second BS 903 at a second measuring instance, and measure the eight DL-PRS from the third BS 905 at a third measuring instance, and so on. In another example, the UE 904 may be configured to measure two (2) DL-PRS from each of the four BSs at a measuring instance. In another example, the UE 904 may be configured to measure four (4) DL-PRS from the first BS 901 and four (4) DL-PRS from the third BS 905 at a first measuring instance, and measure four (4) DL-PRS from the second BS 903 and four (4) DL-PRS from the fourth BS 907 at a second measuring instance, etc.

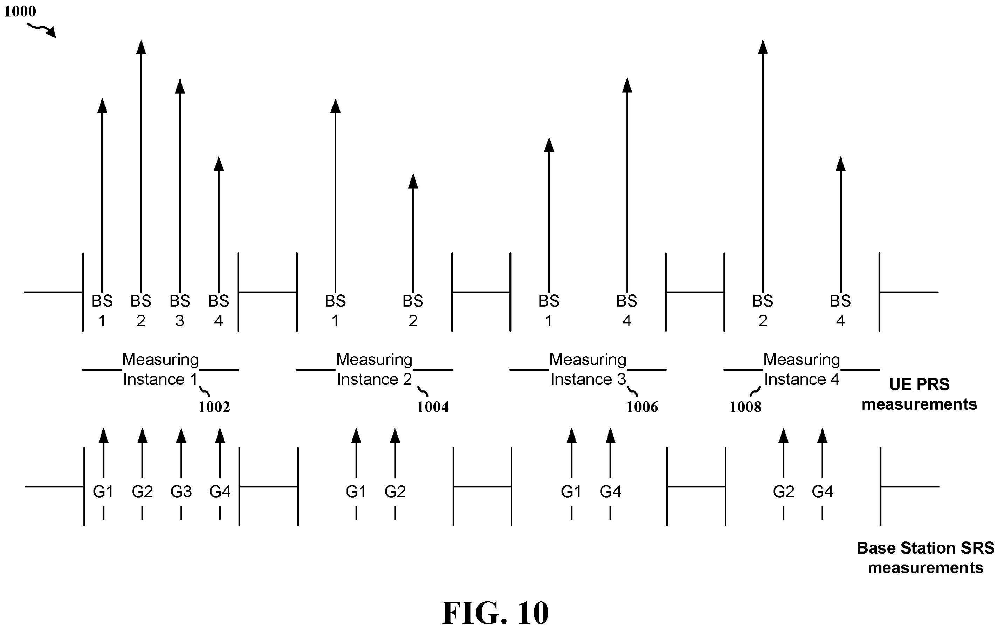

As illustrated at 918, the information 908 may indicate a list of UL-SRS resources (or a list of DL-PRS resources corresponding to the list of UL-SRS resources) in which the base station 902 may consider as having good or suitable measurements, such as having RSRP measurements above a threshold. FIG. 10 is a diagram 1000 illustrating an example of a serving base station determining a list of UL-SRS resources in which a UE may prioritize its DL-PRS measurements based on a prior measuring instance. In one example, as shown at 1002, in a prior measuring instance (e.g., measuring instance one), a UE (e.g., the UE 904) may have transmitted UL-SRSs on a set of UL-SRS resources that are received by a first BS (e.g., BS 1, the first BS 901), a second BS (e.g., BS 2, the second BS 903), a third BS (e.g., BS 3, the third BS 905), and a fourth BS (e.g., BS 4, the fourth BS 907) which may or may not include a serving base station (e.g., the serving base station 902). If each of the four BSs have measured the UL-SRSs transmitted from the UE and has determined that the measured UL-SRSs have measurements above a threshold at each BS, the serving base station may include the UL-SRS resources associated with the four BSs (or their corresponding DL-PRSs) in the list of UL-SRS resources in which the UE may prioritize its DL-PRS measurements (e.g., the list of UL-SRS resources in the information 908). Based on the list, the UE may continue to perform measurements with any of the four BSs.

In another example, as shown at 1004, in a prior measuring instance (e.g., measuring instance two), if the first BS and the second BS have a high quality measurement (e.g., a measurement above a threshold or a measurement being the highest among multiple BSs, etc.) and the third BS and the fourth BS do not have a measurement above a threshold or have not received the UL-SRSs transmitted from the UE, the serving base station may include the UL-SRS resources associated with the first BS and the second BS (or their corresponding DL-PRSs) in the list of UL-SRS resources in which the UE may prioritize its DL-PRS measurements (e.g., the list of UL-SRS resources in the information 908). Based on the list, the UE may focus/prioritize DL-PRS measurements on the first BS and the second BS resources, and the DL-PRS measurements on the third BS and the fourth BS may be deprioritized by the UE in the current measuring occasion or prioritized in a later measuring occasion.

Similarly, as shown at 1006, in a prior measuring instance (e.g., measuring instance three), if the first BS and the fourth BS have a measurement above a threshold, and the second BS and the third BS do not have a measurement above a threshold or have not received the UL-SRSs transmitted from the UE, the serving base station may include the UL-SRS resources associated with the first BS and the fourth BS (or their corresponding DL-PRSs) in the list of UL-SRS resources in which the UE may prioritize its DL-PRS measurements (e.g., the list of UL-SRS resources in the information 908). Based on the list, the UE may focus/prioritize DL-PRS measurements on the first BS and the fourth BS resources, and the DL-PRS measurements on the second BS and the third BS may be deprioritized by the UE in the current measuring occasion or prioritized in a later measuring occasion. As shown at 1008, in a prior measuring instance (e.g., measuring instance four), if the second BS and the fourth BS have a measurement above a threshold, and the first BS and the third BS do not have a measurement above a threshold or have not received the UL-SRSs transmitted from the UE, the serving base station may include the UL-SRS resources associated with the second BS and the fourth BS (or their corresponding DL-PRSs) in the list of UL-SRS resources in which the UE may prioritize its DL-PRS measurements (e.g., the list of UL-SRS resources in the information 908). Based on the list, the UE may focus/prioritize DL-PRS measurements on the second BS and the fourth BS resources, and the DL-PRS measurements on the first BS and the third BS may be deprioritized by the UE in the current measuring occasion or prioritized in a later measuring occasion, etc.

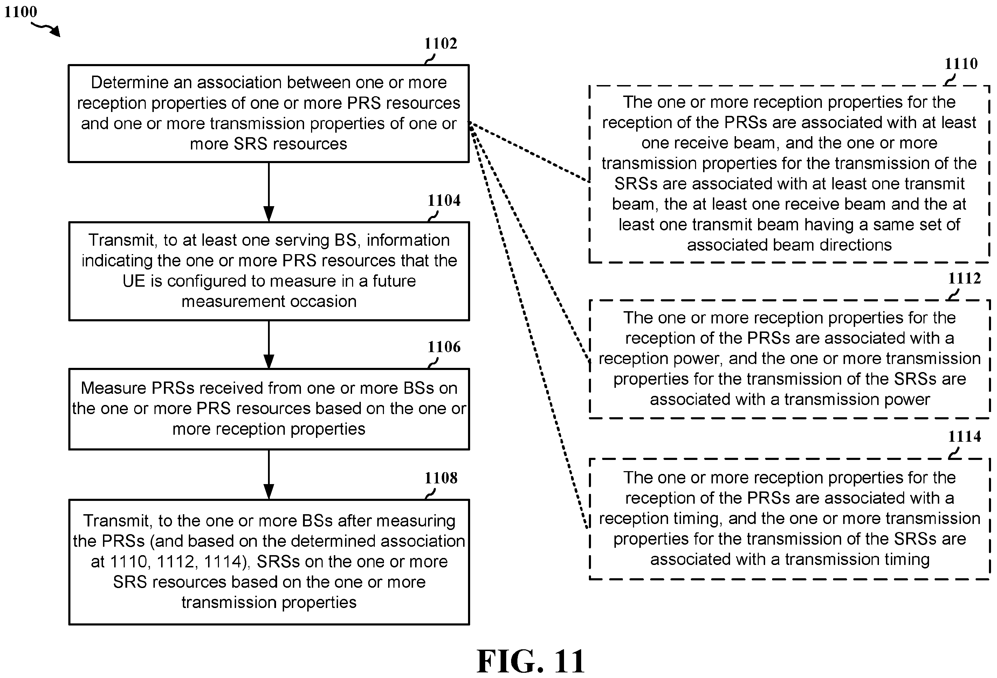

FIG. 11 is a flowchart 1100 of a method of wireless communication. The method may be performed by a UE or a component of a UE (e.g., the UE 104, 350, 404, 602, 704, 804; the apparatus 1202; a processing system, which may include the memory 360 and which may be the entire UE 350 or a component of the UE 350, such as the TX processor 368, the RX processor 356, and/or the controller/processor 359). Optional aspects are illustrated with a dashed line. The method may enable the UE to indicate a list of PRS resources in which the UE plans to measure in a given occasion to a base station, where the PRS measurement occasion may occur before an SRS transmission occasion.

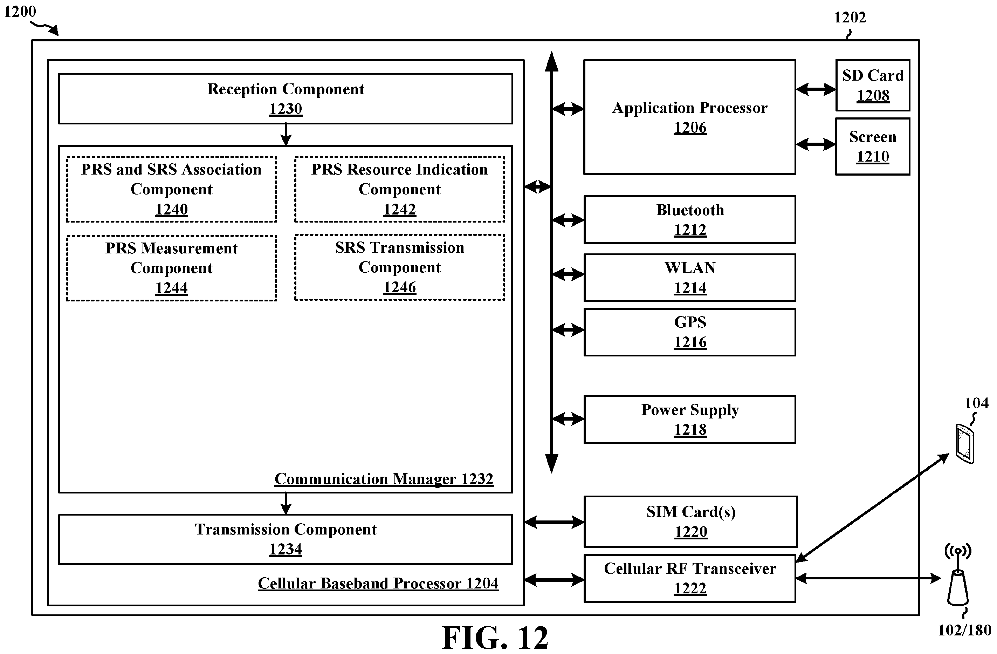

At 1102, the UE may determine an association between one or more reception properties of one or more PRS resources and one or more transmission properties of one or more SRS resources, such as described in connection with FIGs. 7 and 8. For example, at 705, the UE 704 may determine an association between reception properties of PRSs and transmission properties of corresponding SRSs. The determination of the association may be performed, e.g., by the PRS and SRS association component 1240 of the apparatus 1202 in FIG. 12.

In one example, as shown at 1110, the one or more reception properties for the reception of the PRSs may be associated with at least one receive beam, and the one or more transmission properties for the transmission of the SRSs may be associated with at least one transmit beam, where the at least one receive beam and the at least one transmit beam may have a same set of associated beam directions.

In another example, as shown at 1112, the one or more reception properties for the reception of the PRSs may be associated with a reception power, and the one or more transmission properties for the transmission of the SRSs may be associated with a transmission power.

In another example, as shown at 1114, the one or more reception properties for the reception of the PRSs may be associated with a reception timing, and the one or more transmission properties for the transmission of the SRSs may be associated with a transmission timing.

At 1104, the UE may transmit, to at least one serving BS, information indicating the one or more PRS resources that the UE is configured to measure in a future measurement occasion, such as described in connection with FIGs. 7 and 8. For example, at 706, the UE 704 may transmit information 708 indicating PRS resources to be measured by the UE 704 to the BS 702. The transmission of the information indicating the one or more PRS resources may be performed, e.g., by the PRS resource indication component 1242 and/or the transmission component 1234 of the apparatus 1202 in FIG. 12. In one example, the information may be transmitted via at least one of UCI, a MAC-CE, or RRC signaling. The UE may autonomously determine the one or more PRS resources that the UE is configured to measure from a set of PRS resources, where the one or more PRS resources may be a subset of the set of PRS resources.

At 1106, the UE may measure PRSs received from one or more BSs on the one or more PRS resources based on the one or more reception properties, such as described in connection with FIGs. 7 and 8. For example, at 722, the UE 704 may measure DL-PRS received from the base station 702 on the DL-PRS resources 710, 712, and 714 based on one or more reception properties at the UE 704. The measurement of PRSs may be performed, e.g., by the PRS measurement component 1244 and/or the reception component 1230 of the apparatus 1202 in FIG. 12.

At 1108, the UE may transmit, to the one or more BSs after measuring the PRSs (and based on the determined association at 1110, 1112, and 1114), SRSs on the one or more SRS resources based on the one or more transmission properties, such as described in connection with FIGs. 7 and 8. For example, at 728, the UE 704 may transmit UL-SRSs on UL-SRS resources 726, 728, and 730 based on one or more transmission properties that are associated with the one or more reception properties at the UE. For example, the UE 704 may transmit UL-SRSs through at least one transmit beam at the UE 704, where the beam used for transmitting the UL-SRS and the beam used for receiving the DL-PRS may have a same set of associated beam directions. The transmission of the SRSs may be performed, e.g., by the SRS transmission component 1246 and/or the transmission component 1234 of the apparatus 1202 in FIG. 12.

In one example, the one or more BSs may include the at least one serving BS. In another example, the one or more BSs may be different from the at least one serving BS.

In another example, the information indicating the one or more PRS resources may be transmitted before the PRSs are measured, and may indicate the one or more PRS resources that the UE is configured to measure. In such an example, the UE may determine that a quality metric for the one or more PRS resources exceeds a threshold during a previous measurement occasion, where the information may indicate the one or more PRS resources that have the quality metric exceeding the threshold. In such an example, the quality metric may include at least one of an RSRP, a line of sight probability, or a timing delay calibration value.

In another example, the information indicating the one or more PRS resources may be transmitted after the PRSs are measured, and may indicate a subset of the one or more PRS resources that the UE has measured. In such an example, the UE may determine a quality metric for the one or more PRS resources, and the UE may determine the subset of the one or more PRS resources that have a quality metric that exceeds a threshold, where the information may indicate the subset of one or more PRS resources that have the quality metric exceeding the threshold. In such an example, the quality metric may include at least one of an RSRP, a line of sight probability, or a timing delay calibration value.

In another example, the information may be transmitted before or after the PRS is measured, within a configured duration of the measurement of the PRSs.

FIG. 12 is a diagram 1200 illustrating an example of a hardware implementation for an apparatus 1202. The apparatus 1202 is a UE and includes a cellular baseband processor 1204 (also referred to as a modem) coupled to a cellular RF transceiver 1222 and one or more subscriber identity modules (SIM) cards 1220, an application processor 1206 coupled to a secure digital (SD) card 1208 and a screen 1210, a Bluetooth module 1212, a wireless local area network (WLAN) module 1214, a Global Positioning System (GPS) module 1216, and a power supply 1218. The cellular baseband processor 1204 communicates through the cellular RF transceiver 1222 with the UE 104 and/or BS 102/180. The cellular baseband processor 1204 may include a computer-readable medium / memory. The computer-readable medium / memory may be non-transitory. The cellular baseband processor 1204 is responsible for general processing, including the execution of software stored on the computer-readable medium / memory. The software, when executed by the cellular baseband processor 1204, causes the cellular baseband processor 1204 to perform the various functions described *supra.* The computer-readable medium / memory may also be used for storing data that is manipulated by the cellular baseband processor 1204 when executing software. The cellular baseband processor 1204 further includes a reception component 1230, a communication manager 1232, and a transmission component 1234. The communication manager 1232 includes the one or more illustrated components. The components within the communication manager 1232 may be stored in the computer-readable medium / memory and/or configured as hardware within the cellular baseband processor 1204. The cellular baseband processor 1204 may be a component of the UE 350 and may include the memory 360 and/or at least one of the TX processor 368, the RX processor 356, and the controller/processor 359. In one configuration, the apparatus 1202 may be a modem chip and include just the baseband processor 1204, and in another configuration, the apparatus 1202 may be the entire UE (e.g., see 350 of FIG. 3) and include the aforediscussed additional modules of the apparatus 1202.

The communication manager 1232 includes a PRS and SRS association component 1240 that is configured to determine an association between one or more reception properties of one or more PRS resources and one or more transmission properties of one or more SRS resources, e.g., as described in connection with 1102 of FIG. 11. PRS resource indication component 1242 that is configured to transmit, to at least one serving BS, information indicating the one or more PRS resources that the UE is configured to measure in a future measurement occasion, e.g., as described in connection with 1104 of FIG. 11. The communication manager 1232 further includes a PRS measurement component 1244 that is configured to measure PRSs received from one or more BSs on the one or more PRS resources based on the one or more reception properties, e.g., as described in connection with 1106 of FIG. 11. The communication manager 1232 further includes an SRS transmission component 1246 that is configured to transmit, to the one or more BSs after measuring the PRSs, SRSs on the one or more SRS resources based on the one or more transmission properties, e.g., as described in connection with 1108 of FIG. 11.

The apparatus may include additional components that perform each of the blocks of the algorithm in the aforementioned flowchart of FIG. 11. As such, each block in the aforementioned flowchart of FIG. 11 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1202, and in particular the cellular baseband processor 1204, includes means for determining an association between one or more reception properties of one or more PRS resources and one or more transmission properties of one or more SRS resources (e.g., the PRS and SRS association component 1240). The apparatus 1202 includes means for transmitting, to at least one serving BS, information indicating the one or more PRS resources that the UE is configured to measure in a future measurement occasion (e.g., the PRS resource indication component 1242 and/or the transmission component 1234). The apparatus 1202 includes means for measuring PRSs received from one or more BSs on the one or more PRS resources based on the one or more reception properties (e.g., the PRS measurement component 1244 and/or the reception component 1230). The apparatus 1202 includes means for transmitting, to the one or more BSs after measuring the PRSs, SRSs on the one or more SRS resources based on the one or more transmission properties (e.g., the SRS transmission component 1246 and/or the transmission component 1234). In one configuration, the information may be transmitted via at least one of UCI, a MAC-CE, or RRC signaling.

In one configuration, the one or more reception properties for the reception of the PRSs may be associated with at least one receive beam, and the one or more transmission properties for the transmission of the SRSs may be associated with at least one transmit beam, where the at least one receive beam and the at least one transmit beam may have a same set of associated beam directions.

In another configuration, the one or more reception properties for the reception of the PRSs may be associated with a reception power, and the one or more transmission properties for the transmission of the SRSs may be associated with a transmission power.

In another configuration, the one or more reception properties for the reception of the PRSs may be associated with a reception timing, and the one or more transmission properties for the transmission of the SRSs may be associated with a transmission timing.

In another configuration, the UE may autonomously determine the one or more PRS resources that the UE is configured to measure from a set of PRS resources, where the one or more PRS resources may be a subset of the set of PRS resources.

In another configuration, the one or more BSs may include the at least one serving BS, or the one or more BSs may be different from the at least one serving BS.

In another configuration, the information indicating the one or more PRS resources may be transmitted before the PRSs are measured, and may indicate the one or more PRS resources that the UE is configured to measure. In such a configuration, the apparatus 1202 includes means for determining that a quality metric for the one or more PRS resources exceeds a threshold during a previous measurement occasion, where the information may indicate the one or more PRS resources that have the quality metric exceeding the threshold. In such a configuration, the quality metric may include at least one of an RSRP, a line of sight probability, or a timing delay calibration value.

In another configuration, the information indicating the one or more PRS resources may be transmitted after the PRSs are measured, and may indicate a subset of the one or more PRS resources that the UE has measured. In such a configuration, the apparatus 1202 includes means for determining a quality metric for the one or more PRS resources, and means for determining the subset of the one or more PRS resources that have a quality metric that exceeds a threshold, where the information may indicate the subset of one or more PRS resources that have the quality metric exceeding the threshold. In such a configuration, the quality metric may include at least one of an RSRP, a line of sight probability, or a timing delay calibration value.

In another configuration, the information may be transmitted before or after the PRS is measured, within a configured duration of the measurement of the PRSs.

The aforementioned means may be one or more of the aforementioned components of the apparatus 1202 configured to perform the functions recited by the aforementioned means. As described *supra,* the apparatus 1202 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

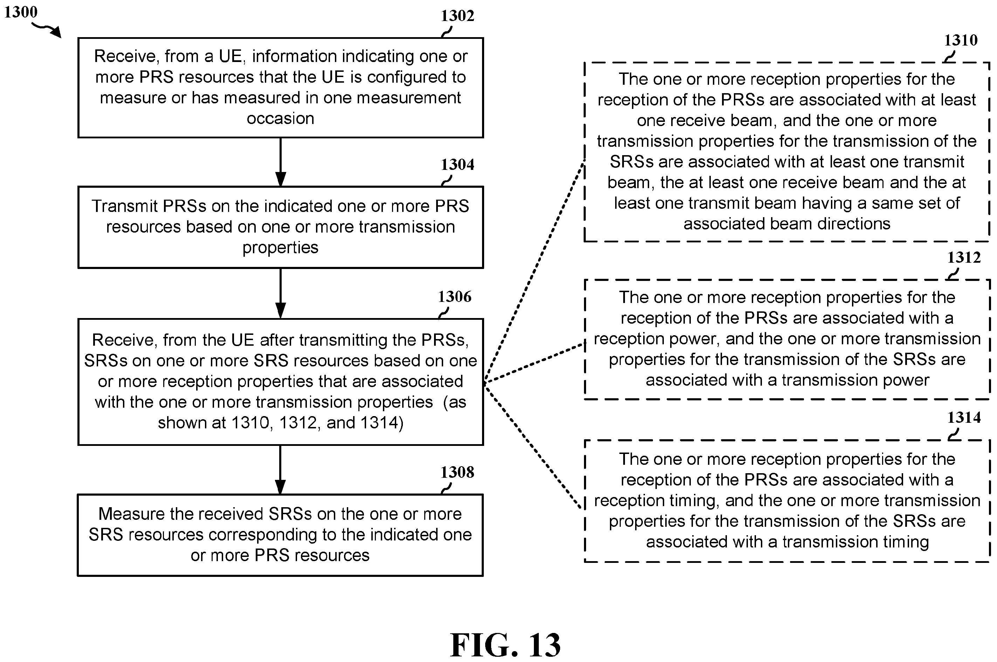

FIG. 13 is a flowchart 1300 of a method of wireless communication. The method may be performed by a base station or a component of a base station (e.g., the base station 102, 180, 310, 702, 802; the BS 604, 606, 608, 610, 801, 803, 805, 807; the apparatus 1402; a processing system, which may include the memory 376 and which may be the entire base station 310 or a component of the base station 310, such as the TX processor 316 the RX processor 370, and/or the controller/processor 375). Optional aspects are illustrated with a dashed line. The method may enable the base station to receive a list of PRS resources from a UE in which the UE plans to measure in a given occasion, such that the base station may measure the SRS corresponding to the PRS which the UE has measured so that right pairs of SRS/PRS are measured by the base station in a measuring occasion.

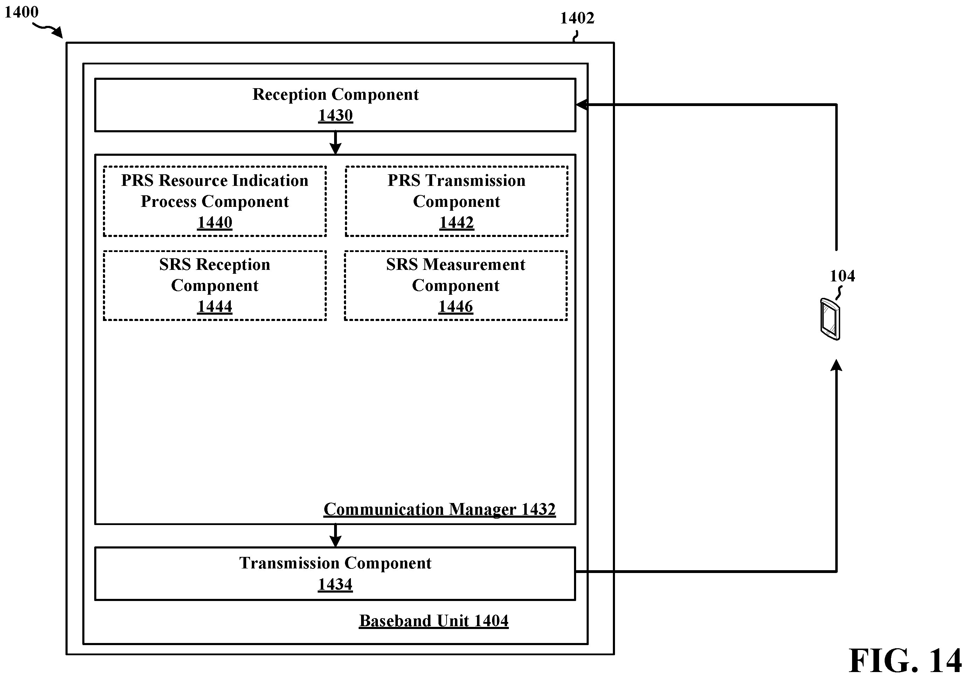

At 1302, the base station may receive, from a UE, information indicating one or more PRS resources that the UE is configured to measure or has measured in one measurement occasion, such as described in connection with FIGs. 7 and 8. For example, at 706, the base station 702 may receive information 708 from the UE 704 indicating PRS resources in which the UE 704 plans or is configured to measure or has measured in one measurement occasion. The reception of the information may be performed, e.g., by the PRS resource indication process component 1440 and/or the reception component 1430 of the apparatus 1402 in FIG. 14. The information may be received via at least one UCI, a MAC-CE, or RRC signaling.

At 1304, the base station may transmit PRSs on the indicated one or more PRS resources based on one or more transmission properties, such as described in connection with FIGs. 7 and 8. For example, at 720, the base station 702 may transmit DL-PRSs on the DL-PRS resources 710, 712, and 714 to the UE 704 based on the information and based on the one or more transmission properties at the base station. The transmission of the PRS may be performed, e.g., by the PRS transmission component 1442 and/or the transmission component 1434 of the apparatus 1402 in FIG. 14.

At 1306, the base station may receive, from the UE after transmitting the PRSs, SRSs on one or more SRS resources based on one or more reception properties that are associated with the one or more transmission properties, such as described in connection with FIGs. 7 and 8. For example, at 724, the base station 702 may receive SRSs from the UE 704 on SRS resources 726, 728, and 730 based on one or more reception properties that are associated with the one or more transmission properties at the base station 702. For example, the base station 702 may receive SRSs from the UE 704 through at least one receive beam at the base station 702, where a beam used for transmitting a DL-PRS and a beam used for receiving a corresponding UL-SRS may have a same set of associated beam directions. The reception of the SRS may be performed, e.g., by the SRS reception component 1444 and/or the reception component 1430 of the apparatus 1402 in FIG. 14.

In one example, as shown at 1310, the one or more transmission properties for the transmission of the PRSs may be associated with at least one transmit beam, and the one or more reception properties for the reception of the SRSs may be associated with at least one receive beam, where the at least one transmit beam and the at least one receive beam may have a same set of associated beam directions.

In another example, as shown at 1312, the one or more transmission properties for the transmission of the PRSs may be associated with a transmission power, and the one or more reception properties for the reception of the SRSs may be associated with a reception power.

In another example, as shown at 1314, the one or more transmission properties for the transmission of the PRSs may be associated with a transmission timing, and the one or more reception properties for the reception of the SRSs may be associated with a reception timing.

At 1308, the base station may measure the received SRSs on the one or more SRS resources corresponding to the indicated one or more PRS resources, such as described in connection with FIGs. 7 and 8. For example, at 732, the base station 702 may measure UL-SRSs received from the UE 704 on SRS resources 726, 728, and 730. The measurement of the SRS may be performed, e.g., by the SRS measurement component 1446 of the apparatus 1402 in FIG. 14.

In one example, the base station may determine at least one RTT in association with the transmitted PRSs and the measured SRSs.

In one example, the base station may send the received information indicating the one or more PRS resources to at least one other BS. In another example, the information indicating the one or more PRS resources may be received from the UE via at least one other BS.

In one example, the information indicating the one or more PRS resources may be received before the PRSs are transmitted, or the information indicating the one or more PRS resources may be received after the PRSs are transmitted.

In another example, the information may be received before or after the PRSs are transmitted, within a configured duration of the transmission of the PRSs.

FIG. 14 is a diagram 1400 illustrating an example of a hardware implementation for an apparatus 1402. The apparatus 1402 is a BS and includes a baseband unit 1404. The baseband unit 1404 may communicate through a cellular RF transceiver with the UE 104. The baseband unit 1404 may include a computer-readable medium / memory. The baseband unit 1404 is responsible for general processing, including the execution of software stored on the computer-readable medium / memory. The software, when executed by the baseband unit 1404, causes the baseband unit 1404 to perform the various functions described *supra.* The computer-readable medium / memory may also be used for storing data that is manipulated by the baseband unit 1404 when executing software. The baseband unit 1404 further includes a reception component 1430, a communication manager 1432, and a transmission component 1434. The communication manager 1432 includes the one or more illustrated components. The components within the communication manager 1432 may be stored in the computer-readable medium / memory and/or configured as hardware within the baseband unit 1404. The baseband unit 1404 may be a component of the BS 310 and may include the memory 376 and/or at least one of the TX processor 316, the RX processor 370, and the controller/processor 375.

The communication manager 1432 includes a PRS resource indication process component 1440 that is configured to receive, from a UE, information indicating one or more PRS resources that the UE is configured to measure or has measured in one measurement occasion, e.g., as described in connection with 1302 of FIG. 13. The communication manager 1432 further includes a PRS transmission component 1442 that is configured to transmit PRSs on the indicated one or more PRS resources based on one or more transmission properties, e.g., as described in connection with 1304 of FIG. 13. The communication manager 1432 further includes an SRS reception component 1444 that is configured to receive, from the UE after transmitting the PRSs, SRSs on one or more SRS resources based on one or more reception properties that are associated with the one or more transmission properties, e.g., as described in connection with 1306 of FIG. 13. The communication manager 1432 further includes an SRS measurement component 1446 that is configured to measure the received SRSs on the one or more SRS resources corresponding to the indicated one or more PRS resources, e.g., as described in connection with 1308 of FIG. 13.

The apparatus may include additional components that perform each of the blocks of the algorithm in the aforementioned flowchart of FIG. 13. As such, each block in the aforementioned flowchart of FIG. 13 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1402, and in particular the baseband unit 1404, includes means for receiving, from a UE, information indicating one or more PRS resources that the UE is configured to measure or has measured in one measurement occasion (e.g., the PRS resource indication process component 1440 and/or the reception component 1430). The apparatus 1402 includes means for transmitting PRSs on the indicated one or more PRS resources based on one or more transmission properties (e.g., the PRS transmission component 1442 and/or the transmission component 1434). The apparatus 1402 includes means for receiving, from the UE after transmitting the PRSs, SRSs on one or more SRS resources based on one or more reception properties that are associated with the one or more transmission properties (e.g., the SRS reception component 1444 and/or the reception component 1430). The apparatus 1402 includes means for measuring the received SRSs on the one or more SRS resources corresponding to the indicated one or more PRS resources (e.g., the SRS measurement component 1446). The information may be received via at least one UCI, a MAC-CE, or RRC signaling.

In one configuration, the one or more transmission properties for the transmission of the PRSs may be associated with at least one transmit beam, and the one or more reception properties for the reception of the SRSs may be associated with at least one receive beam, where the at least one transmit beam and the at least one receive beam may have a same set of associated beam directions.

In another configuration, the one or more transmission properties for the transmission of the PRSs may be associated with a transmission power, and the one or more reception properties for the reception of the SRSs may be associated with a reception power.

In another configuration, the one or more transmission properties for the transmission of the PRSs may be associated with a transmission timing, and the one or more reception properties for the reception of the SRSs may be associated with a reception timing.

In another configuration, the base station may determine at least one RTT in association with the transmitted PRSs and the measured SRSs.

In another configuration, the base station may send the received information indicating the one or more PRS resources to at least one other BS. In another configuration, the information indicating the one or more PRS resources may be received from the UE via at least one other BS.

In another configuration, the information indicating the one or more PRS resources may be received before the PRSs are transmitted, or the information indicating the one or more PRS resources may be received after the PRSs are transmitted.

In another configuration, the information may be received before or after the PRSs are transmitted, within a configured duration of the transmission of the PRSs.

The aforementioned means may be one or more of the aforementioned components of the apparatus 1402 configured to perform the functions recited by the aforementioned means. As described *supra,* the apparatus 1402 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

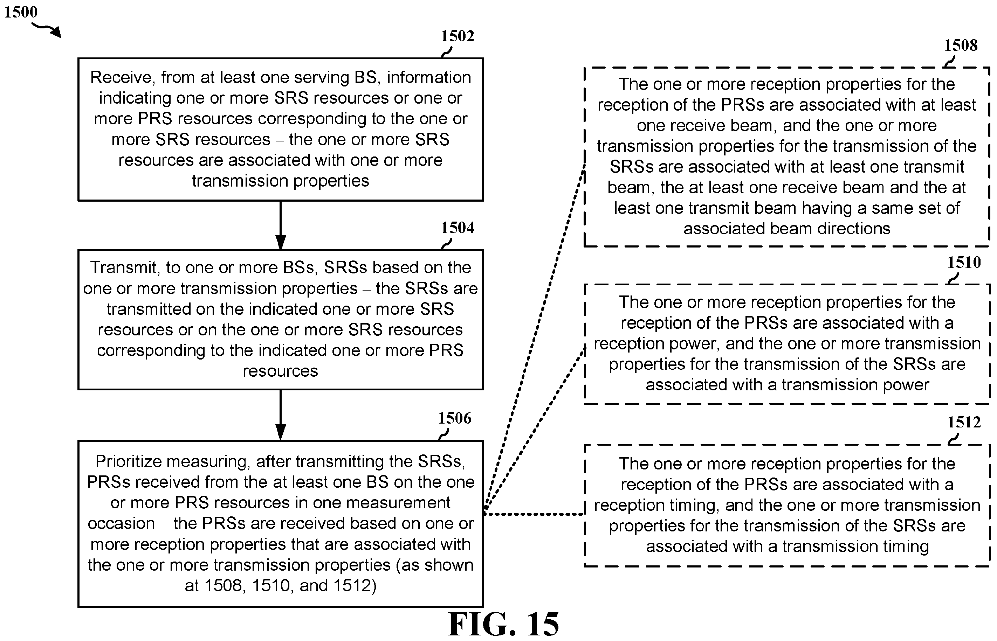

FIG. 15 is a flowchart 1500 of a method of wireless communication. The method may be performed by a UE or a component of a UE (e.g., the UE 104, 350, 404, 602, 904; the apparatus 1602; a processing system, which may include the memory 360 and which may be the entire UE 350 or a component of the UE 350, such as the TX processor 368, the RX processor 356, and/or the controller/processor 359). Optional aspects are illustrated with a dashed line. The method may enable the UE to receive a list of SRS resources from a base station in which the UE may prioritize its PRS measurements based at least in part on the list.

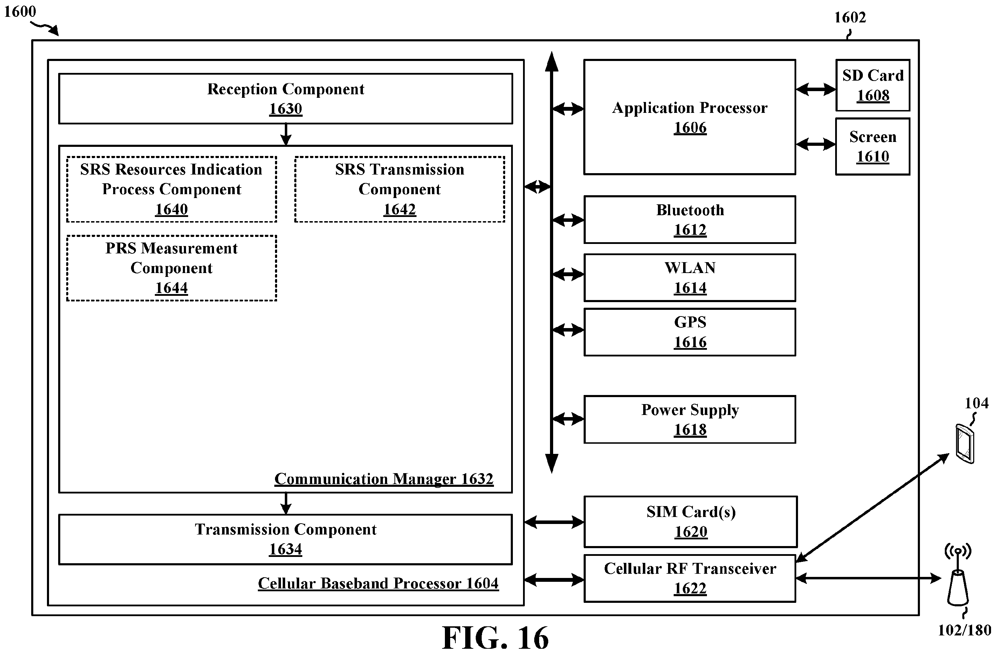

At 1502, the UE may receive, from at least one serving BS, information indicating one or more SRS resources or one or more PRS resources corresponding to the one or more SRS resources, the one or more SRS resources being associated with one or more transmission properties, such as described in connection with FIG. 9. For example, at 906, the UE 904 may receive information 908 from the base station 902 indicating a list of UL-SRS resources (or a list of DL-PRS resources corresponding to the list of UL-SRS resources) that the UE 904 may transmit or may be configured to transmit, the list of UL-SRS resources may be associated with one or more transmission properties at the UE. The reception of the information indicating the SRS resources may be performed, e.g., by the SRS resource indication process component 1640 and/or the reception component 1630 of the apparatus 1602 in FIG. 16. In one example, the information may be received via at least one of DCI, a MAC-CE, or RRC signaling.

At 1504, the UE may transmit, to one or more BSs, SRSs based on the one or more transmission properties, the SRSs being transmitted on the indicated one or more SRS resources or on the one or more SRS resources corresponding to the indicated one or more PRS resources, such as described in connection with FIG. 9. For example, at 920, the UE 904 may transmit SRSs to the first BS 901, the second BS 903, the third BS 905, and the fourth BS 907 based on one or more transmission properties at the UE. The transmission of SRSs may be performed, e.g., by the SRS transmission component 1642 and/or the transmission component 1634 of the apparatus 1602 in FIG. 16.

At 1506, the UE may prioritize measuring, after transmitting the SRSs, PRSs received from the at least one BS on the one or more PRS resources in one measurement occasion, the PRSs being received based on one or more reception properties that are associated with the one or more transmission properties, such as described in connection with FIG. 9. For example, at 925, the UE 904 may prioritize measuring DL-PRSs transmitted from the first BS 901, the second BS 903, the third BS 905, and the fourth BS 907, where the UE 904 may receive the DL-PRSs based on one or more reception properties that are associated with the one or more transmission properties. The measurement of the PRSs may be performed, e.g., by the PRS measurement component 1644 and/or the reception component 1630 of the apparatus 1602 in FIG. 16.

In one example, as shown at 1508, the one or more transmission properties for the transmission of the SRSs may be associated with at least one transmit beam, and the one or more reception properties for the reception of the PRSs may be associated with at least one receive beam, where the at least one receive beam and the at least one transmit beam may have a same set of associated beam directions.

In another example, as shown at 1510, the one or more transmission properties for the transmission of the SRSs may be associated with a transmission power, and the one or more reception properties for the reception of the PRSs may be associated with a reception power.

In another example, as shown at 1512, the one or more transmission properties for the transmission of the SRSs may be associated with a transmission timing, and the one or more reception properties for the reception of the PRSs may be associated with a reception timing.

In another example, the UE may determine a time difference between the transmission of the SRSs and the reception of the PRSs, and the UE may transmit, to the at least one serving BS, information indicating the time difference in a measurement report.

In another example, the one or more BSs may include the at least one serving BS, or the one or more BSs may be different from the at least one serving BS.

FIG. 16 is a diagram 1600 illustrating an example of a hardware implementation for an apparatus 1602. The apparatus 1602 is a UE and includes a cellular baseband processor 1604 (also referred to as a modem) coupled to a cellular RF transceiver 1622 and one or more subscriber identity modules (SIM) cards 1620, an application processor 1606 coupled to a secure digital (SD) card 1608 and a screen 1610, a Bluetooth module 1612, a wireless local area network (WLAN) module 1614, a Global Positioning System (GPS) module 1616, and a power supply 1618. The cellular baseband processor 1604 communicates through the cellular RF transceiver 1622 with the UE 104 and/or BS 102/180. The cellular baseband processor 1604 may include a computer-readable medium / memory. The computer-readable medium / memory may be non-transitory. The cellular baseband processor 1604 is responsible for general processing, including the execution of software stored on the computer-readable medium / memory. The software, when executed by the cellular baseband processor 1604, causes the cellular baseband processor 1604 to perform the various functions described *supra.* The computer-readable medium / memory may also be used for storing data that is manipulated by the cellular baseband processor 1604 when executing software. The cellular baseband processor 1604 further includes a reception component 1630, a communication manager 1632, and a transmission component 1634. The communication manager 1632 includes the one or more illustrated components. The components within the communication manager 1632 may be stored in the computer-readable medium / memory and/or configured as hardware within the cellular baseband processor 1604. The cellular baseband processor 1604 may be a component of the UE 350 and may include the memory 360 and/or at least one of the TX processor 368, the RX processor 356, and the controller/processor 359. In one configuration, the apparatus 1602 may be a modem chip and include just the baseband processor 1604, and in another configuration, the apparatus 1602 may be the entire UE (e.g., see 350 of FIG. 3) and include the aforediscussed additional modules of the apparatus 1602.

The communication manager 1632 includes an SRS resource indication process component 1640 that is configured to receive, from at least one serving BS, information indicating one or more SRS resources or one or more PRS resources corresponding to the one or more SRS resources, the one or more SRS resources being associated with one or more transmission properties, e.g., as described in connection with 1502 of FIG. 15. The communication manager 1632 further includes an SRS transmission component 1642 that is configured to transmit, to one or more BSs, SRSs based on the one or more transmission properties, the SRSs being transmitted on the indicated one or more SRS resources or on the one or more SRS resources corresponding to the indicated one or more PRS resources, e.g., as described in connection with 1504 of FIG. 15. The communication manager 1632 further includes a PRS measurement component 1644 that is configured to prioritize measuring, after transmitting the SRSs, PRSs received from the at least one BS on the one or more PRS resources in one measurement occasion, the PRSs being received based on one or more reception properties that are associated with the one or more transmission properties, e.g., as described in connection with 1506 of FIG. 15.

The apparatus may include additional components that perform each of the blocks of the algorithm in the aforementioned flowchart of FIG. 15. As such, each block in the aforementioned flowchart of FIG. 15 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1602, and in particular the cellular baseband processor 1604, includes means for receiving, from at least one serving BS, information indicating one or more SRS resources or one or more PRS resources corresponding to the one or more SRS resources, the one or more SRS resources being associated with one or more transmission properties (e.g., the SRS resource indication process component 1640 and/or the reception component 1630). The apparatus 1602 includes means for transmitting, to one or more BSs, SRSs based on the one or more transmission properties, the SRSs being transmitted on the indicated one or more SRS resources or on the one or more SRS resources corresponding to the indicated one or more PRS resources (e.g., the SRS transmission component 1642 and/or the transmission component 1634). The apparatus 1602 includes means for prioritize measuring, after transmitting the SRSs, PRSs received from the at least one BS on the one or more PRS resources in one measurement occasion, the PRSs being received based on one or more reception properties that are associated with the one or more transmission properties (e.g., the PRS measurement component 1644 and/or the reception component 1630). In one configuration, the information may be received via at least one of DCI, a MAC-CE, or RRC signaling.

In one configuration, the one or more transmission properties for the transmission of the SRSs may be associated with at least one transmit beam, and the one or more reception properties for the reception of the PRSs may be associated with at least one receive beam, where the at least one receive beam and the at least one transmit beam may have a same set of associated beam directions.

In another configuration, the one or more transmission properties for the transmission of the SRSs may be associated with a transmission power, and the one or more reception properties for the reception of the PRSs may be associated with a reception power.

In another configuration, the one or more transmission properties for the transmission of the SRSs may be associated with a transmission timing, and the one or more reception properties for the reception of the PRSs may be associated with a reception timing.

In another configuration, the apparatus 1602 includes means for determining a time difference between the transmission of the SRSs and the reception of the PRSs, and means for transmitting, to the at least one serving BS, information indicating the time difference in a measurement report.

In another configuration, the one or more BSs may include the at least one serving BS, or the one or more BSs may be different from the at least one serving BS.

The aforementioned means may be one or more of the aforementioned components of the apparatus 1602 configured to perform the functions recited by the aforementioned means. As described *supra,* the apparatus 1602 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

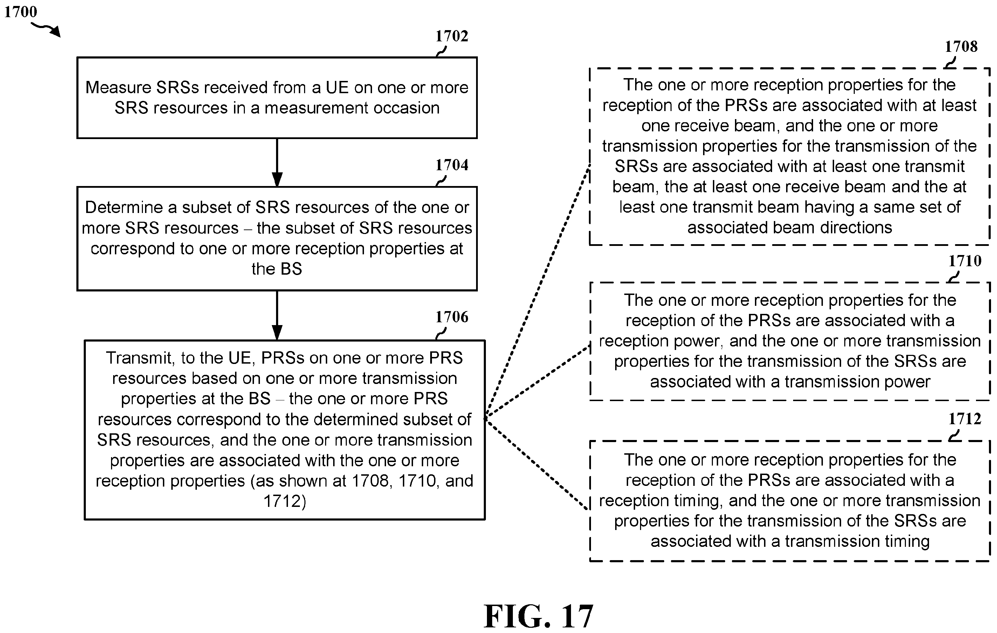

FIG. 17 is a flowchart 1700 of a method of wireless communication. The method may be performed by a base station or a component of a base station (e.g., the base station 102, 180, 310, 902; the BS 604, 606, 608, 610, 901, 903, 905, 907; the apparatus 1802; a processing system, which may include the memory 376 and which may be the entire base station 310 or a component of the base station 310, such as the TX processor 316 the RX processor 370, and/or the controller/processor 375). Optional aspects are illustrated with a dashed line. The method may enable the base station to indicate a list of SRS resources to a UE in which the UE may prioritize its PRS measurements based at least in part on the list.

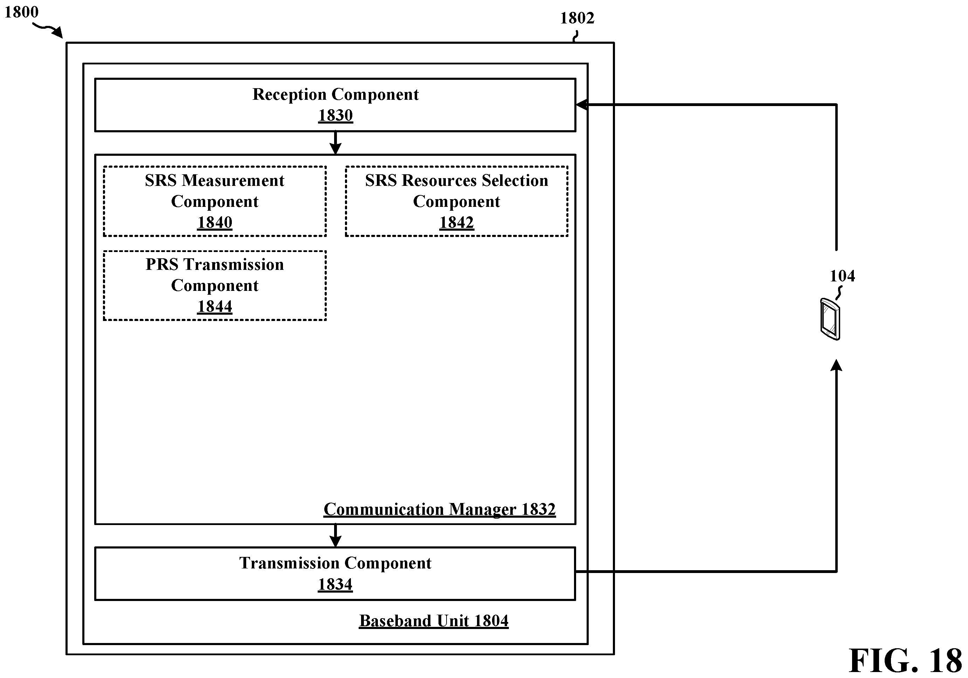

At 1702, the base station may measure SRSs received from a UE on one or more SRS resources in a measurement occasion, such as described in connection with FIG. 9. For example, at 922, the base station 902 may measure SRSs received from the UE 904 on SRS resources 910, 912, 914 and 916. The measurement of the SRSs may be performed, e.g., by the SRS measurement component 1840 and/or the reception component 1830 of the apparatus 1802 in FIG. 18.

At 1704, the base station may determine a subset of SRS resources of the one or more SRS resources, the subset of SRS resources corresponding to one or more reception properties at the BS, such as described in connection with FIG. 9. For example, at 906, the base station 902 may determine a list of SRS resources in which the UE 904 may prioritize its measurement on, and the list of SRS resources may correspond to one or more reception properties at the BS. The determination of the subset of SRS resources may be performed, e.g., by the SRS resources selection component 1842 of the apparatus 1802 in FIG. 18.

In one example, in determining the subset of SRS resources, the base station may determine a quality metric for the one or more SRS resources, and the base station may determine the subset of SRS resources based on the SRS resources in the subset having a quality metric exceeding a threshold. In such an example, the quality metric may include at least one of an RSRP, a line of sight probability, or a timing delay calibration value.

At 1706, the base station may transmit, to the UE, PRSs on one or more PRS resources based on one or more transmission properties at the BS, the one or more PRS resources corresponding to the determined subset of SRS resources, the one or more transmission properties being associated with the one or more reception properties, such as described in connection with FIG. 9. For example, at 924, the first BS 901, the second BS 903, the third BS 905, and the fourth BS 907 may transmit DL-PRSs on PRS resources 926, 928, 930, 932 based on one or more transmission properties that are associated with one or more reception properties. For example, the first BS 901 may transmit DL-PRSs through at least one transmit beam at the first BS 901, where the at least one transmit beam may have a same set of associated beam directions with at least one receive beam for receiving the corresponding SRSs. The transmission of the PRSs may be performed, e.g., by the PRS transmission component 1844 and/or the transmission component 1834 of the apparatus 1802 in FIG. 18.

In one example, as shown at 1708, the one or more reception properties for the reception of the SRSs may be associated with at least one receive beam, and the one or more transmission properties for the transmission of the PRSs may be associated with at least one transmit beam, where the at least one transmit beam and the at least one receive beam may have a same set of associated beam directions.

In another example, as shown at 1710, the one or more reception properties for the reception of the SRSs may be associated with a reception power, and the one or more transmission properties for the transmission of the PRSs may be associated with a transmission power.

In another example, as shown at 1712, the one or more reception properties for the reception of the SRSs may be associated with a reception timing, and the one or more transmission properties for the transmission of the PRSs may be associated with a transmission timing.

In another example, the base station may transmit, to the UE, information indicating the subset of SRS resources or the one or more PRS resources corresponding to the subset of SRS resources. In such an example, the information may be transmitted via at least one of DCI, a MAC-CE, or RRC signaling. In such an example, the information may be transmitted after the SRSs are measured, within a configured duration of the measurement of the SRSs.

FIG. 18 is a diagram 1800 illustrating an example of a hardware implementation for an apparatus 1802. The apparatus 1802 is a BS and includes a baseband unit 1804. The baseband unit 1804 may communicate through a cellular RF transceiver with the UE 104. The baseband unit 1804 may include a computer-readable medium / memory. The baseband unit 1804 is responsible for general processing, including the execution of software stored on the computer-readable medium / memory. The software, when executed by the baseband unit 1804, causes the baseband unit 1804 to perform the various functions described *supra*. The computer-readable medium / memory may also be used for storing data that is manipulated by the baseband unit 1804 when executing software. The baseband unit 1804 further includes a reception component 1830, a communication manager 1832, and a transmission component 1834. The communication manager 1832 includes the one or more illustrated components. The components within the communication manager 1832 may be stored in the computer-readable medium / memory and/or configured as hardware within the baseband unit 1804. The baseband unit 1804 may be a component of the BS 310 and may include the memory 376 and/or at least one of the TX processor 316, the RX processor 370, and the controller/processor 375.

The communication manager 1832 includes an SRS measurement component 1840 that is configured to measure SRSs received from a UE on one or more SRS resources in a measurement occasion, e.g., as described in connection with 1702 of FIG. 17. The communication manager 1832 further includes an SRS resources selection component 1842 that is configured to determine a subset of SRS resources of the one or more SRS resources, the subset of SRS resources corresponding to one or more reception properties at the BS, e.g., as described in connection with 1704 of FIG. 17. The communication manager 1832 further includes a PRS transmission component 1844 that is configured to transmit, to the UE, PRSs on one or more PRS resources based on one or more transmission properties at the BS, the one or more PRS resources corresponding to the determined subset of SRS resources, the one or more transmission properties being associated with the one or more reception properties, e.g., as described in connection with 1706 of FIG. 17.

The apparatus may include additional components that perform each of the blocks of the algorithm in the aforementioned flowchart of FIG. 17. As such, each block in the aforementioned flowchart of FIG. 17 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

In one configuration, the apparatus 1802, and in particular the baseband unit 1804, includes means for measuring SRSs received from a UE on one or more SRS resources in a measurement occasion (e.g., the SRS measurement component 1840 and/or the reception component 1830). The apparatus 1802 includes means for determining a subset of SRS resources of the one or more SRS resources, the subset of SRS resources corresponding to one or more reception properties at the BS (e.g., the SRS resources selection component 1842). The apparatus 1802 includes means for transmitting, to the UE, PRSs on one or more PRS resources based on one or more transmission properties at the BS, the one or more PRS resources corresponding to the determined subset of SRS resources, the one or more transmission properties being associated with the one or more reception properties (e.g., the PRS transmission component 1844 and/or the transmission component 1834).

In one configuration, in determining the subset of SRS resources, the apparatus 1802 includes means for determining a quality metric for the one or more SRS resources, and means for determining the subset of SRS resources based on the SRS resources in the subset having a quality metric exceeding a threshold. In such a configuration, the quality metric may include at least one of an RSRP, a line of sight probability, or a timing delay calibration value.

In another configuration, the one or more reception properties for the reception of the SRSs may be associated with at least one receive beam, and the one or more transmission properties for the transmission of the PRSs may be associated with at least one transmit beam, where the at least one transmit beam and the at least one receive beam may have a same set of associated beam directions.

In another configuration, the one or more reception properties for the reception of the SRSs may be associated with a reception power, and the one or more transmission properties for the transmission of the PRSs may be associated with a transmission power.

In another configuration, the one or more reception properties for the reception of the SRSs may be associated with a reception timing, and the one or more transmission properties for the transmission of the PRSs may be associated with a transmission timing.

In another configuration, the apparatus 1802 includes means for transmitting, to the UE, information indicating the subset of SRS resources or the one or more PRS resources corresponding to the subset of SRS resources. In such a configuration, the information may be transmitted via at least one of DCI, a MAC-CE, or RRC signaling. In such a configuration, the information may be transmitted after the SRSs are measured, within a configured duration of the measurement of the SRSs.

The aforementioned means may be one or more of the aforementioned components of the apparatus 1802 configured to perform the functions recited by the aforementioned means. As described *supra,* the apparatus 1802 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

**Claims**

1. A method (1100) of wireless communication at a user equipment, UE, comprising:

determining (1102) an association between one or more reception properties of one or more positioning reference signal, PRS, resources and one or more transmission properties of one or more sounding reference signal, SRS, resources;

transmitting (1104), to at least one serving base station, BS, information indicating the one or more PRS resources that the UE is configured to measure in a future measurement occasion;

measuring (1106), based on the information, PRSs received from one or more BSs on the one or more PRS resources based on the one or more reception properties; and

transmitting (1108), to the one or more BSs after measuring the PRSs, SRSs on the one or more SRS resources based on the one or more transmission properties.

2. The method (1100) of claim 1, wherein the one or more reception properties for the reception of the PRSs are associated with at least one receive beam, and the one or more transmission properties for the transmission of the SRSs are associated with at least one transmit beam, the at least one receive beam and the at least one transmit beam having a same set of associated beam directions.

3. The method (1100) of claim 1, wherein the one or more reception properties for the reception of the PRSs are associated with a reception power, and the one or more transmission properties for the transmission of the SRSs are associated with a transmission power.

4. The method (1100) of claim 1, wherein the one or more reception properties for the reception of the PRSs are associated with a reception timing, and the one or more transmission properties for the transmission of the SRSs are associated with a transmission timing.

5. The method (1100) of claim 1, wherein the information is transmitted via at least one of uplink control information, UCI, a medium access control, MAC, control element, CE, MAC-CE, or radio resource control, RRC, signaling.

6. The method (1100) of claim 1, wherein the one or more BSs comprise the at least one serving BS.

7. An apparatus for wireless communication at a user equipment, UE, comprising:

means for determining an association between one or more reception properties of one or more positioning reference signal, PRS, resources and one or more transmission properties of one or more sounding reference signal, SRS, resources;

means for transmitting, to at least one serving base station, BS, information indicating the one or more PRS resources that the UE is configured to measure in a future measurement occasion;

means for measuring, based on the information, PRSs received from one or more BSs on the one or more PRS resources based on the one or more reception properties; and

means for transmitting, to the one or more BSs after measuring the PRSs, SRSs on the one or more SRS resources based on the one or more transmission properties.

8. The apparatus of claim 7, further comprising means for performing the method of any of claims 2 to 6

9. A non-transitory computer-readable medium storing computer executable code at a user equipment, UE, the code when executed by a processor causes the processor to perform the method of any of claims 1 to 6.

**Patentansprüche**

1. Verfahren (1100) zur drahtlosen Kommunikation an einem Benutzergerät (UE), umfassend: Bestimmen (1102) einer Zuordnung zwischen einer oder mehreren Empfangseigenschaften einer oder mehrerer Positionsreferenzsignalressourcen (PRS) und einer oder mehreren Übertragungseigenschaften einer oder mehrerer Sondierungsreferenzsignalressourcen (SRS);

Senden (1104) von Informationen an mindestens eine bedienende Basisstation (BS), die die eine oder mehreren PRS-Ressourcen angeben, die das UE bei einer zukünftigen Messung messen soll;

Messen (1106) auf der Grundlage der Informationen von PRS, die von einer oder mehreren BS empfangen wurden, auf der einen oder den mehreren PRS-Ressourcen auf der Grundlage der einen oder der mehreren Empfangseigenschaften; und

Senden (1108) an die eine oder die mehreren BS nach dem Messen der PRS von SRS auf der einen oder den mehreren SRS-Ressourcen auf der Grundlage der einen oder der mehreren Übertragungseigenschaften.

2. Verfahren (1100) nach Anspruch 1, wobei die eine oder die mehreren Empfangseigenschaften für den Empfang der PRS mit mindestens einem Empfangsstrahl verbunden sind und die eine oder die mehreren Übertragungseigenschaften für die Übertragung der SRS mit mindestens einem Sendestrahl verbunden sind, wobei der mindestens eine Empfangsstrahl und der mindestens eine Sendestrahl denselben Satz von zugehörigen Strahlrichtungen aufweisen.

3. Verfahren (1100) nach Anspruch 1, wobei die eine oder die mehreren Empfangseigenschaften für den Empfang der PRS mit einer Empfangsleistung verbunden sind und die eine oder die mehreren Übertragungseigenschaften für die Übertragung der SRS mit einer Sendeleistung verbunden sind.

4. Verfahren (1100) nach Anspruch 1, wobei die eine oder mehreren Empfangseigenschaften für den Empfang der PRS mit einem Empfangszeitpunkt verbunden sind und die eine oder mehreren Übertragungseigenschaften für die Übertragung der SRS mit einem Übertragungszeitpunkt verbunden sind.

5. Verfahren (1100) nach Anspruch 1, wobei die Informationen über mindestens eine der folgenden Signalisierungen übertragen werden: Uplink-Steuerungsinformationen (UCI), ein Mediumzugriffskontrollelement (MAC), ein Steuerelement (CE), MAC-CE oder eine Funkressourcenkontrolle (RRC).

6. Verfahren (1100) nach Anspruch 1, wobei die eine oder mehreren BS die mindestens eine bedienende BS umfassen.

7. Vorrichtung für die drahtlose Kommunikation an einem Benutzergerät (UE), umfassend: Mittel zum Bestimmen einer Zuordnung zwischen einer oder mehreren Empfangseigenschaften einer oder mehrerer Positionierungsreferenzsignalressourcen (PRS) und einer oder mehreren Übertragungseigenschaften einer oder mehrerer Sondierungsreferenzsignalressourcen (SRS);

Mittel zum Übertragen von Informationen, die die eine oder mehreren PRS-Ressourcen angeben, die das UE bei einer zukünftigen Messung messen soll, an mindestens eine bedienende Basisstation (BS); Mittel zum Messen, basierend auf den Informationen, von PRS, die von einer oder mehreren BS empfangen wurden, auf der einen oder den mehreren PRS-Ressourcen basierend auf der einen oder den mehreren Empfangseigenschaften; und Mittel zum Senden, an die eine oder die mehreren BS nach dem Messen der PRS, von SRS auf der einen oder den mehreren SRS-Ressourcen basierend auf der einen oder den mehreren Übertragungseigenschaften.

8. Vorrichtung nach Anspruch 7, die ferner Mittel zum Ausführen des Verfahrens nach einem der Ansprüche 2 bis 6 umfasst.

9. Nicht-transitorisches, computerlesbares Medium, das einen computerausführbaren Code in einer Benutzerausrüstung (UE) speichert, wobei der Code, wenn er von einem Prozessor ausgeführt wird, den Prozessor veranlasst, das Verfahren nach einem der Ansprüche 1 bis 6 auszuführen.

**Revendications**

1. Procédé (1100) de communication sans fil au niveau d'un équipement utilisateur, UE, comprenant :

la détermination (1102) d'une association entre une ou plusieurs propriétés de réception d'une ou plusieurs ressources de signal de référence de positionnement, PRS, et une ou plusieurs propriétés d'émission d'une ou plusieurs ressources de signal de référence de sondage, SRS ;
la transmission (1104), à au moins une station de base, BS, de desserte, d'informations indiquant les une ou plusieurs ressources de PRS que l'UE peut de par sa configuration mesurer lors d'une future occasion de mesure ;
la mesure (1106), sur la base des informations, de PRS reçus en provenance d'une ou plusieurs BS sur les une ou plusieurs ressources de PRS sur la base des une ou plusieurs propriétés de réception ; et
l'émission (1108), vers les une ou plusieurs BS après la mesure des PRS, de SRS sur les une ou plusieurs ressources de SRS sur la base des une ou plusieurs propriétés d'émission.

2. Procédé (1100) selon la revendication 1, dans lequel les une ou plusieurs propriétés de réception pour la réception des PRS sont associées à au moins un faisceau de réception, et les une ou plusieurs propriétés d'émission pour l'émission des SRS sont associées à au moins un faisceau d'émission, l'au moins un faisceau de réception et l'au moins un faisceau d'émission ayant un même ensemble de directions de faisceau associées.

3. Procédé (1100) selon la revendication 1, dans lequel les une ou plusieurs propriétés de réception pour la réception des PRS sont associées à une puissance de réception, et les une ou plusieurs propriétés d'émission pour l'émission des SRS sont associées à une puissance d'émission.

4. Procédé (1100) selon la revendication 1, dans lequel les une ou plusieurs propriétés de réception pour la réception des PRS sont associées à une temporisation de réception, et les une ou plusieurs propriétés d'émission pour l'émission des SRS sont associées à une temporisation d'émission.

**5.** Procédé (1100) selon la revendication 1, dans lequel les informations sont transmises par l'intermédiaire au moins d'informations de commande de liaison montante, UCI, et/ou d'un élément de commande, CE, de commande d'accès au support, MAC, MAC-CE, et/ou d'une signalisation de commande de ressources radio, RRC.

**6.** Procédé (1100) selon la revendication 1, dans lequel les une ou plusieurs BS comprennent l'au moins une BS de desserte.

**7.** Appareil de communication sans fil au niveau d'un équipement utilisateur, UE, comprenant :

> un moyen de détermination d'une association entre une ou plusieurs propriétés de réception d'une ou plusieurs ressources de signal de référence de positionnement, PRS, et une ou plusieurs propriétés d'émission d'une ou plusieurs ressources de signal de référence de sondage, SRS ;
> un moyen de transmission, à au moins une station de base, BS, de desserte, d'informations indiquant les une ou plusieurs ressources de PRS que l'UE peut de par sa configuration mesurer lors d'une future occasion de mesure ;
> un moyen de mesure, sur la base des informations, de PRS reçus en provenance d'une ou plusieurs BS sur les une ou plusieurs ressources de PRS sur la base des une ou plusieurs propriétés de réception ; et
> un moyen d'émission, vers les une ou plusieurs BS après la mesure des PRS, de SRS sur les une ou plusieurs ressources de SRS sur la base des une ou plusieurs propriétés d'émission.

**8.** Dispositif selon la revendication 7, comprenant en outre des moyens pour mettre en œuvre le procédé selon l'une quelconque des revendications 2 à 6.

**9.** Support non transitoire lisible par ordinateur stockant un code exécutable par ordinateur au niveau d'un équipement utilisateur, UE, le code, à son exécution par un processeur, amenant le processeur à réaliser le procédé selon l'une quelconque des revendications 1 à 6.

**FIG. 1**

**FIG. 2A**

**FIG. 2B**

**FIG. 2C**

**FIG. 2D**

EP 4 324 145 B1

**FIG. 3**

EP 4 324 145 B1

Base Station
402 / 408

A resource set
of DL-PRS 416

DL-PRS
resources

$\theta$

$\phi$

$\theta'$

$\phi'$

RTT
414

UL-SRS
412

DL-PRS
410

Base Station
402 / 406

$\rho$

UE
404

$\phi$ = Azimuth angle of departure (AOD)

$\theta$ = Zenith angle of departure (ZOD)

$\rho$, $(\theta', \phi')$ = distance and angles of arrival in polar coordinates

FIG. 4

EP 4 324 145 B1

**FIG. 5A**

**FIG. 5B**

FIG. 6

FIG. 7

800

UE
804

Determine an association between Rx properties of PRSs and Tx properties of SRSs

805

822
Measure DL-PRS

822
Measure DL-PRS

822
Measure DL-PRS

822
Measure DL-PRS

Receive PRSs based on the Rx properties and transmit SRSs based on Tx properties

Information 808

DL-PRS to be measured: DL-PRSs 810, 812, 814, 816 ~818

Information 808 indicating PRS resources to be measure

BS/LMF
802

Determine an association between Tx properties of PRSs and Rx properties of SRSs 805

BS 1
801

BS 2
803

BS 3
805

BS 4
807

806

Information 808 809

Information 808

Information 808

DL-PRSs 810 820

834
Measure UL-SRS

UL-SRSs 826 824

DL-PRSs 812 820

834
Measure UL-SRS

UL-SRSs 828 824

DL-PRSs 814 820

834
Measure UL-SRS

UL-SRSs 830 824

DL-PRSs 816 820

834
Measure UL-SRS

UL-SRSs 832 824

Transmit PRSs based on the Tx properties and receive SRSs based on Rx properties

**FIG. 8**

FIG. 9

**FIG. 10**

**1100**

**1102**

Determine an association between one or more reception properties of one or more PRS resources and one or more transmission properties of one or more SRS resources

**1104**

Transmit, to at least one serving BS, information indicating the one or more PRS resources that the UE is configured to measure in a future measurement occasion

**1106**

Measure PRSs received from one or more BSs on the one or more PRS resources based on the one or more reception properties

**1108**

Transmit, to the one or more BSs after measuring the PRSs (and based on the determined association at 1110, 1112, 1114), SRSs on the one or more SRS resources based on the one or more transmission properties

**1110**

The one or more reception properties for the reception of the PRSs are associated with at least one receive beam, and the one or more transmission properties for the transmission of the SRSs are associated with at least one transmit beam, the at least one receive beam and the at least one transmit beam having a same set of associated beam directions

**1112**

The one or more reception properties for the reception of the PRSs are associated with a reception power, and the one or more transmission properties for the transmission of the SRSs are associated with a transmission power

**1114**

The one or more reception properties for the reception of the PRSs are associated with a reception timing, and the one or more transmission properties for the transmission of the SRSs are associated with a transmission timing

## FIG. 11

1200

1202

**Reception Component**
**1230**

**PRS and SRS Association Component**
**1240**

**PRS Resource Indication Component**
**1242**

**PRS Measurement Component**
**1244**

**SRS Transmission Component**
**1246**

**Communication Manager 1232**

**Transmission Component**
**1234**

**Cellular Baseband Processor 1204**

**Application Processor**
**1206**

**SD Card**
**1208**

**Screen**
**1210**

**Bluetooth**
**1212**

**WLAN**
**1214**

**GPS**
**1216**

**Power Supply**
**1218**

**SIM Card(s)**
**1220**

**Cellular RF Transceiver**
**1222**

104

102/180

## FIG. 12

EP 4 324 145 B1

1300

1302

Receive, from a UE, information indicating one or more PRS resources that the UE is configured to measure or has measured in one measurement occasion

1304

Transmit PRSs on the indicated one or more PRS resources based on one or more transmission properties

1306

Receive, from the UE after transmitting the PRSs, SRSs on one or more SRS resources based on one or more reception properties that are associated with the one or more transmission properties (as shown at 1310, 1312, and 1314)

1308

Measure the received SRSs on the one or more SRS resources corresponding to the indicated one or more PRS resources

1310

The one or more reception properties for the reception of the PRSs are associated with at least one receive beam, and the one or more transmission properties for the transmission of the SRSs are associated with at least one transmit beam, the at least one receive beam and the at least one transmit beam having a same set of associated beam directions

1312

The one or more reception properties for the reception of the PRSs are associated with a reception power, and the one or more transmission properties for the transmission of the SRSs are associated with a transmission power

1314

The one or more reception properties for the reception of the PRSs are associated with a reception timing, and the one or more transmission properties for the transmission of the SRSs are associated with a transmission timing

**FIG. 13**

**1400**

**1402**

```
┌─────────────────────────────────────────────────┐
│  ┌─────────────────────────────────────────────┐ │
│  │         Reception Component                  │ │
│  │              1430                            │ │
│  └─────────────────────────────────────────────┘ │
│  ┌─────────────────────────────────────────────┐ │
│  │  ┌───────────────────┐  ┌──────────────────┐ │ │
│  │  │ PRS Resource      │  │ PRS Transmission │ │ │
│  │  │ Indication        │  │ Component        │ │ │
│  │  │ Process Component │  │ 1442             │ │ │
│  │  │ 1440              │  │                  │ │ │
│  │  └───────────────────┘  └──────────────────┘ │ │
│  │  ┌───────────────────┐  ┌──────────────────┐ │ │
│  │  │ SRS Reception     │  │ SRS Measurement  │ │ │
│  │  │ Component         │  │ Component        │ │ │
│  │  │ 1444              │  │ 1446             │ │ │
│  │  └───────────────────┘  └──────────────────┘ │ │
│  │                                              │ │
│  │          Communication Manager 1432          │ │
│  └─────────────────────────────────────────────┘ │
│  ┌─────────────────────────────────────────────┐ │
│  │       Transmission Component                 │ │
│  │              1434                            │ │
│  └─────────────────────────────────────────────┘ │
│              Baseband Unit 1404                   │
└─────────────────────────────────────────────────┘
```

**104**

# FIG. 14

**1500**

**1502**

Receive, from at least one serving BS, information indicating one or more SRS resources or one or more PRS resources corresponding to the one or more SRS resources – the one or more SRS resources are associated with one or more transmission properties

**1504**

Transmit, to one or more BSs, SRSs based on the one or more transmission properties – the SRSs are transmitted on the indicated one or more SRS resources or on the one or more SRS resources corresponding to the indicated one or more PRS resources

**1506**

Prioritize measuring, after transmitting the SRSs, PRSs received from the at least one BS on the one or more PRS resources in one measurement occasion – the PRSs are received based on one or more reception properties that are associated with the one or more transmission properties (as shown at 1508, 1510, and 1512)

**1508**

The one or more reception properties for the reception of the PRSs are associated with at least one receive beam, and the one or more transmission properties for the transmission of the SRSs are associated with at least one transmit beam, the at least one receive beam and the at least one transmit beam having a same set of associated beam directions

**1510**

The one or more reception properties for the reception of the PRSs are associated with a reception power, and the one or more transmission properties for the transmission of the SRSs are associated with a transmission power

**1512**

The one or more reception properties for the reception of the PRSs are associated with a reception timing, and the one or more transmission properties for the transmission of the SRSs are associated with a transmission timing

**FIG. 15**

EP 4 324 145 B1

**FIG. 16**

1600

1602

**Reception Component 1630**

**SRS Resources Indication Process Component 1640**

**SRS Transmission Component 1642**

**PRS Measurement Component 1644**

**Communication Manager 1632**

**Transmission Component 1634**

**Cellular Baseband Processor 1604**

**Application Processor 1606**

**SD Card 1608**

**Screen 1610**

**Bluetooth 1612**

**WLAN 1614**

**GPS 1616**

**Power Supply 1618**

**SIM Card(s) 1620**

**Cellular RF Transceiver 1622**

104

102/180

EP 4 324 145 B1

1700

**1702**
Measure SRSs received from a UE on one or more SRS resources in a measurement occasion

**1704**
Determine a subset of SRS resources of the one or more SRS resources – the subset of SRS resources correspond to one or more reception properties at the BS

**1706**
Transmit, to the UE, PRSs on one or more PRS resources based on one or more transmission properties at the BS – the one or more PRS resources correspond to the determined subset of SRS resources, and the one or more transmission properties are associated with the one or more reception properties (as shown at 1708, 1710, and 1712)

**1708**
The one or more reception properties for the reception of the PRSs are associated with at least one receive beam, and the one or more transmission properties for the transmission of the SRSs are associated with at least one transmit beam, the at least one receive beam and the at least one transmit beam having a same set of associated beam directions

**1710**
The one or more reception properties for the reception of the PRSs are associated with a reception power, and the one or more transmission properties for the transmission of the SRSs are associated with a transmission power

**1712**
The one or more reception properties for the reception of the PRSs are associated with a reception timing, and the one or more transmission properties for the transmission of the SRSs are associated with a transmission timing

**FIG. 17**

EP 4 324 145 B1

FIG. 18

**REFERENCES CITED IN THE DESCRIPTION**

**Patent documents cited in the description**

- GR 20210100258
- WO 2020101266 A
- US 2020022167 A